(19) Europäisches Patentamt
European Patent Office
Office européen des brevets

(11) **EP 2 031 816 B1**

(12) **EUROPEAN PATENT SPECIFICATION**

(45) Date of publication and mention
of the grant of the patent:
**22.02.2012 Bulletin 2012/08**

(51) Int Cl.:
***H04L 29/06*** (2006.01)

(21) Application number: **07016954.5**

(22) Date of filing: **29.08.2007**

(54) **Optimal operation of hierarchical peer-to-peer networks**

Optimaler Betrieb hierarchischer Peer-to-Peer-Netzwerke

Fonctionnement optimal de réseaux hiérarchiques poste à poste

(84) Designated Contracting States:
**DE FR GB**

(43) Date of publication of application:
**04.03.2009 Bulletin 2009/10**

(73) Proprietor: **NTT DoCoMo, Inc.**
**Chiyoda-ku**
**Tokyo 100-6150 (JP)**

(72) Inventors:
• **Despotovic, Zoran, Dr.**
  **80469 Munich (DE)**
• **Kellerer, Wolfgang, Dr.**
  **82256 Fürstenfeldbruck (DE)**
• **Zöls, Stefan**
  **80801 Munich (DE)**
• **Hofstaetter, Quirin**
  **80807 Munich (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
• **STEFAN ZOELS, ZORAN DESPOTOVIC, WORLFGANG KELLERER: ""Cost-Based Analysis of Hierarchical DHT Design"" PROCEEDINGS 6TH IEEE CONFERENCE P2P'06, 2006, XP002457964**
• **GURMEET SINGH MANKU: ""Routing Networks for Distributed Hash Tables"" PODC 2003, 2003, XP002457965**
• **YOUNG JUNE PYUN ET AL: "Constructing a balanced, (log(N)/loglog(N))-diameter super-peer topology for scalable P2P systems" PEER-TO-PEER COMPUTING, 2004. PROCEEDINGS. PROCEEDINGS. FOURTH INTERNATIONAL CONFERENCE ON ZURICH, SWITZERLAND 25-27 AUG. 2004, PISCATAWAY, NJ, USA,IEEE, 25 August 2004 (2004-08-25), pages 210-218, XP010724985 ISBN: 0-7695-2156-8**
• **ZHENYUN ZHUANG ET AL: "Dynamic layer management in super-peer architectures" PARALLEL PROCESSING, 2004. ICPP 2004. INTERNATIONAL CONFERENCE ON MONTREAL, QC, CANADA 15-18 AUG. 2004, PISCATAWAY, NJ, USA,IEEE, 15 August 2004 (2004-08-15), pages 29-36, XP010718576 ISBN: 0-7695-2197-5**

**Description**

<u>Background</u>

The present invention relates to the field of hierarchical peer-to-peer overlay systems and in particular to determining the optimal operation point of such systems in terms of a superpeer-to-leafnode ratio.

Overlay networks are networks, which build on top of another, underlying physical network. Nodes in the overlay can be thought of as being connected by virtual or logical links, each of which corresponds to a path, comprising one or many physical links of the underlying network. For example, many peer-to-peer networks are overlay networks because they run on top of the Internet. Dial-up Internet is an example for an overlay upon the telephone network. Overlay networks can be constructed in order to permit lookups of application level concepts, such as files or data of an arbitrary type, which are not supported by ordinary routing protocols, for example IP (internet protocol) routing.

A peer-to-peer (P2P) network is a network that relies primarily on the computing power and bandwidth of the participants, referred to as peers or peer nodes, in the network, rather than concentrating in a relatively low number of servers. Thus, a peer-to-peer network does not have the notion of clients or servers, but only equal peer nodes that simultaneously function as both "clients" and "servers" to the other nodes or peers on the network. Peer-to-peer networks are typically used, for example, for sharing content files containing audio, video, data or anything in digital format, or for transmitting real time data, such a telephonic traffic. An important goal of peer-to-peer networks is that all clients provide resources, including bandwidth, storage space and computing power. Thus, as nodes arrive and demand on the system increases, the total capacity of the system also increases.

As mentioned before, the peer-to-peer overlay network consists of all the participating peers as overlay network nodes. There are overlay links between any two nodes that know each other, i.e. if a participating peer knows the location of another peer in the peer-to-peer network, then there is a directed edge from the former node to the latter node in the overlay network. Based on how the nodes in the overlay network are linked to each other, one can classify the peer-to-peer networks as unstructured or structured.

An unstructured peer-to-peer network is formed when the overlay links are established arbitrarily. Such networks can be easily constructed as a new peer that wants to join the network, can copy existing links of another node and form its own links over time. In an unstructured peer-to-peer network, if a peer wants to find a desired content in the network, the request has to be flooded through the network in order to find as many peers as possible that share the content. The main disadvantage with such networks is that the queries may not always be resolved. A popular content is likely to be available at several peers and any peer searching for it is likely to find the same, but, if a peer is looking for a rare or a not-so-popular content shared by only a few other peers, then it is highly unlikely that the search will be successful. Since there is no correlation between a peer and the content managed by it, there is no guarantee that flooding will find a peer that has the desired data. Furthermore, flooding also causes a high amount of signaling traffic in the network, and hence such networks have a very poor search efficiency.

Structured peer-to-peer networks overcome the limitations of unstructured networks by maintaining a distributed hash table (DHT) and by allowing each peer to be responsible for a specific part of the content in the network. These networks use hash functions to assign values, i.e. hash values, to every content and every peer in the network, and then follow a global protocol in determining which peer is responsible for which content. This way, whenever a peer wants to search for some data, it can use the global protocol to determine the peer responsible for the data and to then direct the search towards the responsible peer. The term hash value is also referred to as key or index, in particular in the context of managing the distributed content. Correspondingly, the term key space is used for defining the overall set of possible keys. Some known structured peer networks include: Chord, Pastry, Tapestry, CAN and Tulip.

A hash function or a hash algorithm is a reproducible method of turning data, typically a document or file in general into a value suitable to be handled by a computer or any other device. These functions provide a way of creating a small digital "fingerprint" from any kind of data. The hash value is the resulting "fingerprint". The aforementioned hash tables are a major application for hash functions, and enable fast lookup or search of a data record given its hash value.

Considering, for example, a distributed hash table built around an abstract key space, such as the set of 160-bit strings, the ownership of the key space is split among the participating nodes according to a key space partitioning scheme and the overlay network connects the nodes, allowing them to find the owner of any given key in the key space. Once these components are in place, a typical use of the distributed hash table for storage and retrieval might proceed as follows. To store a file with a given filename f1 in the distributed hash table, the hash value of f1 is determined, producing a 160-bit key k1. Thereafter a message *put*(k1, d1), d1 being the physical address, e.g. IP address of the file owner, may be sent to any node participating in the distributed hash table. The message is forwarded from node to node through the overlay network until is reaches the single node responsible for key k1 as specified by the key space partitioning where the pair (k1, d1) is stored. Any other client can then retrieve the contents of the file by again hashing the file name f1 to produce key k1 and asking any distributed hashing table node to find the data associated with k1, for example, with a message *get*(k1). The message will again be routed through the overlay network to the node responsible for key k1, which will reply with the stored data d1. The data d1 itself can be routed using the same route as for the get-message, but typically is transmitted using a different route based on a different physical route the underlying physical network provides.

To enable the above operations distributed hash tables employ a distance function d(k1, k2) which defines an abstract notion of the distance from key k1 to key k2. Each node is assigned a single key, which in the context of routing is also called overlay network identifier. A node with identifier i owns all the keys for which i is the closest identifier, measured according to the distance function d. In other words, the node with the identifier i is responsible for all records or documents having keys k for which i is the closest identifier, measured according to d(i, k).

The Chord DHT is a specific consistent distributed hash table, which treats keys as points on a circle, and where d(k1, k2) is the distance traveling clockwise around the circle from k1 to k2. Thus, the circular key space is split into contiguous segments whose endpoints are the node identifiers. If i1 and i2 are two adjacent node identifiers, than a node with the identifier i2 owns all the keys that fall between i1 and i2.

Each peer maintains a set of links to other peers and together they form the overlay network, and are picked in a structured way, called the network's topology. The links are established toward a small set of remote, see distance function, peers and to a number of the closest peers. All distributed hash table topologies share some variant of the most essential property: for any key k, the node either owns k or has a link to a peer that is closer to k in terms of the key space distance defined above. It is then easy to route a message to the owner of any key k using the following greedy algorithm: at each step, forward the message to the neighbor whose identifier is closest to k. When there is no such neighbor, then the present node must be the closest node, which is the owner of k as defined above. This type of routing is sometimes also called key-based routing.

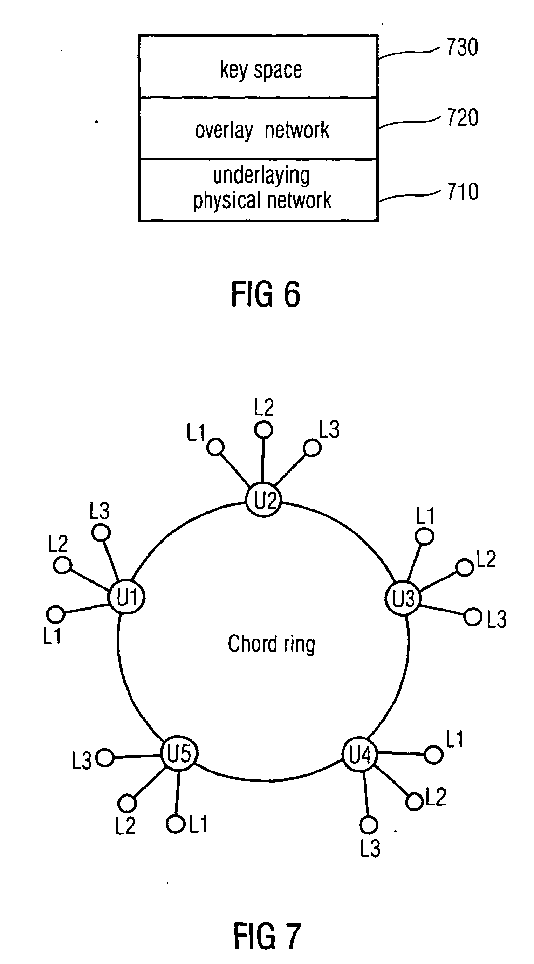

Fig. 6 shows the layered structure of a peer-to-peer overlay network with the underlying physical network 710, the virtual or logical overlay network 720 of the peer-to-peer network on top of the underlying physical network 710, and the key space 730, which is managed by the nodes or peers of the overlay network 720. It should be noted that, for example, for a Chord ring DHT system as described before, the key partitions of the key space 730 are assigned to the peers in a clockwise manner, but this does not mean that for routing purposes the overlay network itself only comprises two overlay links for each node, i.e. the two links to the directly preceding and directly subsequent neighbor nodes according to the Chord ring structure, as will be explained later.

Normally, the keys are assigned to the peers by hashing a peer's IP address and a randomly chosen string into a hash value. A side goal of using a hash function to map source keys to peers is balancing the load distribution: each peer should be responsible for approximately the same number of keys.

To sum up, the specific designs of DHTs depend on the choice of key space, distance function, key partitioning, and linking strategy. However, the good properties related to the efficiency of routing do not come for free. For constructing and maintaining a DHT peers have to deal in particular with the problem of node joins and failures. Since the freedom to choose neighbors in a structured P2P network is constrained, maintenance algorithms are required to reestablish the consistency of routing tables in the presence of network dynamics. Depending on the type of guarantees given by the network different deterministic and probabilistic maintenance strategies have been developed. Maintenance actions can be triggered by various events, such as periodical node joins and leaves or routing failures due to inconsistent routing tables. The different maintenance strategies trade-off maintenance cost versus degree of consistency and thus failure resilience of the network.

However, the current DHT solutions focus only on the fixed internet as the target environments and are not appropriate for mobile computing environments. They do not take into account the main limitations of the mobile devices, such as their low computing and communication capabilities or high communication costs, neither do they consider other specifics of cellular or mobile ad hoc networks. This problem can be addressed by providing a DHT architecture in which the participating peers are divided into two groups, see Fig. 7, where powerful devices are categorized as superpeers $U_1$ to $U_5$, while weaker devices such as mobile phones are called leafnodes $L_1$ to $L_3$. In the distributed hash table according to Fig. 7, the superpeers are organized in a Chord ring as described by I. Stoica, R. Morris, D. Karger, M. Kaashoek, and H. Balakrishnan., "Chord: *A Scalable Peer-to-Peer Lookup Service for Internet Applications",* ACM SIG-COMM Conference, 2001, and serve as proxies to the leafnodes, which are attached to them and do not participate in the ring.

In the following, a hierarchical peer-to-peer overlay network will be described in more detail based on Fig. 7. As mentioned before, the hierarchical system architecture according to Fig. 7 defines two different classes or hierarchy levels of peers: superpeers and leafnodes. The superpeers, as shown in Fig. 7 establish a structured DHT-based overlay in form of a Chord ring, wherein each, furthermore, acts as a proxy for its leafnodes, i.e. the leafnodes communicate within the peer-to-peer network only via their superpeers, for example for querying a document within the peer-to-peer overlay network. Thus, leafnodes maintain only an overlay connection to their superpeer. To be able to recognize and react to a failure of their superpeer, they periodically run a simple PING-PONG algorithm. Moreover, they store a list containing other available superpeers in the system, in order to be able to rejoin the overlay network after a superpeer failure.

In contrast, superpeers perform multiple other tasks. In one exemplary implementation leafnodes joining the network transfer the lists of pointers to the objects they share to their corresponding superpeers. The superpeers then insert these references into the overlay network and act as their owners. When a leafnode performs a look-up, e.g. queries for an object, the superpeer it is connected to resolves the look-up by using the search functionality of the Chord overlay, determines the responsible superpeer based on the object's key, and forwards the result to the leafnode. In a different implementation the superpeer being responsible for the searched object or document, responds by transmitting the requested document directly to the leafnode, which requested the document, without providing a response to the superpeer acting for its leafnode.

Additionally, since the superpeers establish a conventional Chord ring, they periodically run Chord's maintenance algorithms and refresh periodically all references they maintain in order to keep them up-to-date.

In Zoels S., Despotovic Z., Kellerer W., Cost-Based Analysis of Hierarchical DHT Design, Sixth IEEE International Conference on P2P Computing, Cambridge, UK, 2006, in the following referred to as [1], the following two clear advantages of such a hierarchical system over the traditional flat DHT organizations were demonstrated.

First, the maintenance traffic is substantially reduced. This traffic is necessary when nodes join and leave the system in order to keep the routing tables consistent, as described previously. In the architecture as described in [1], almost no maintenance traffic is necessary when leafnodes leave the system. At the same time, the traffic needed to maintain the Chord ring itself is also reduced because superpeers are selected from nodes with higher online times.

Second, as described in [1], the total operation cost of the network is reduced as the nodes or peers for which communication is more expensive perform less traffic.

In [1] a cost model was introduced to judge only optimality of horizontal hierarchical distributed hash tables (HDHT) (flat DHTs are included in the model as a special case). An optimal HDHT configuration is defined in [1] as a function of the total traffic generated in the overlay network (also termed as "cost") and individual load of the peers. More specifically, all the messages generated in the system are calculated, including traffic related to queries as well as maintenance traffic, and expressed as a function of the superpeer fraction $\alpha$, i.e. the number of top-level peers $N_{sp}$ divided by the total number of peers N. The superpeer fraction $\alpha$ is the only considered parameter.

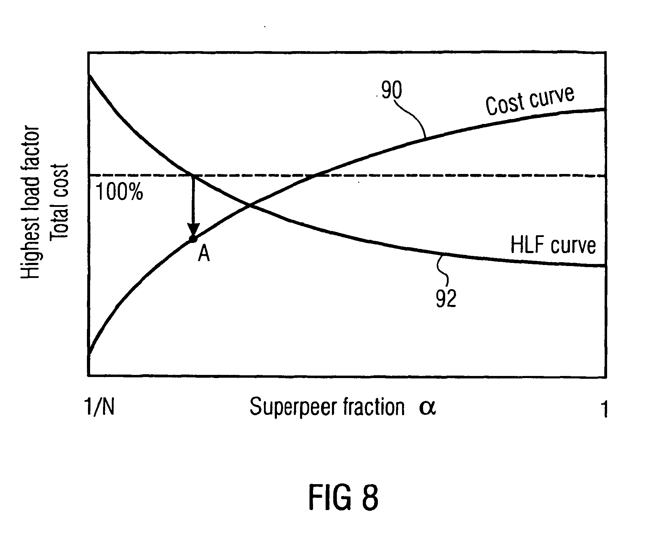

In Fig. 8, the cost curve 90 shows an example. Fig. 8 corresponds to the hypothetical scenario with a fixed number of peers N, i.e. the peer population remains unchanged. At one extreme, for the superpeer fraction $\alpha$ = 1/N, we have a classical client-server system that minimizes the total network traffic. As the fraction $\alpha$ of superpeers increases, so does the network traffic, i.e. the cost-curve 90. At the other extreme, for $\alpha$ = 1 (there are no leaves, all peers are superpeers) we have a flat DHT. In this case, the total network traffic is maximum.

To determine an optimum value of the superpeer fraction $\alpha$, the individual costs of the peers are taken into account. For this purpose a load factor $LF_n$ for every participating peer n (n=1,2,...,N) is defined. The load factor $LF_n$ of peer n (n=1,2,...,N) is the ratio between the cost $C_n$ (n=1,2,...,N) for peer n (n=1,2,...,N) at a given time instant and the maximum cost value (cost limit) peer n (n=1,2,...,N) is willing to accept $C^n_{max}$, i.e. $LF_n = C_n/C^n_{max}$ (n=1, 2,...,N). As an example, one can think of uplink bandwidth consumption as the considered cost. Other interpretations are also possible, e.g. disc space.

A quantity called the highest load factor (HLF) plays an important role in how optimum system configurations are determined. HLF is defined as the maximum load factor that can be observed across all participating peers, i.e. HLF = $\max_n(LF_n)$ (n=1,2,...,N). Again, in Fig. 8, the HLF curve 92 shows an example. As the fraction $\alpha$ of superpeers grows, the HLF drops. The intuition behind is quite clear, as more peers become superpeers they share the load in the system and the load of the most heavily loaded peers drops. Contrary thereto, if the ratio $\alpha$ of superpeers drops below a predefined value, HLFs of more than 100% can be observed. Consequently, one or more peers are overloaded, as they bear higher costs than they can accept. In general HLFs higher than 100% should be avoided in order to ensure system stability.

In the scenario from Fig. 8, it is assumed that the system is homogenous and that all N peers set the same values for $C^n_{max}$. In this case, the highest load curve 92 in Fig. 8 is the load curve of any superpeer, provided that the load among them is balanced. When the system is heterogeneous, the HLF depends not only on how many superpeers there are, but also on which nodes are superpeers. In this case, the highest load-curve 92 will not be smoothly shaped, as shown in Fig. 8, but will exhibit jumps.

An optimal operating point A of the system is defined as a point in which no peer is overloaded, while the total network costs is as low as possible. That is, total network costs are minimized without overloading any peer in the system. In other words, this optimality criterion represents a tradeoff between a fully decentralized system in which load per node is relatively low, but the total costs are high and the centralized system in which the network operation is also small but the system servers bear most of the load.

Even though there are many hierarchical DHT architectures proposed in the literature, most of the works that target specifically the problem of building and configuring hierarchical P2P networks deal with unstructured networks. B. Yang and H. Garcia-Molina, "Designing a Super-Peer Network," in Proceedings of the 19th International Conference on Data Engineering (ICDE03), vol. 1063, no. 6382/03, 2003, present a thorough study of superpeer based unstructured P2P networks.

A. Montresor, "A robust protocol for building superpeer overlay topologies," in Proceedings of the Fourth International Conference on Peer-to-Peer Computing, 2004., 2004, pp. 202-209, also focuses on unstructured P2P networks. His goal is to construct a superpeer based P2P network with the smallest possible number of superpeers. He proposes an algorithm (called SG-1) in which nodes exchange information about their capacities with randomly selected other nodes through a gossip protocol and then try to push their leafnodes toward most powerful discovered superpeers. This strategy eventually leads to a minimum set of superpeers sufficient to cover the remaining nodes in the network as leaves.

The SG-2 algorithm proposed in G. Jesi, A. Montresor, and O. Babaoglu, "Proximity-Aware Superpeer Overlay Topologies," in Proceedings of the 2nd IEEE International Workshop on SelfMan, 2006, pp. 43-57, focuses on a proximity-aware superpeer topology that minimizes the latency between leafnodes and superpeers. The round-trip time (RTT) is either measured directly or approximated through a virtual coordinate service that associates every node with a position in the virtual space. Superpeers broadcast their availability in their area of the virtual coordinate space so that joining leafnodes are able to connect to the most powerful node in their proximity. Again the nodes' capacities are represented by the maximum number of leafnodes a specific peer can handle and uniformly distributed in the range [1; 500] for the simulations. Similar to its ancestor SG-1, the algorithm needs additional signaling traffic but brings considerable advantages for applications that need low RTTs.

Somewhat related are P2P architectures in which a distinction between peers is made but without explicit hierarchical division among them. Typically, they target heterogeneity among the nodes. The rationale behind is that more powerful nodes (or also nodes deriving higher utility from participation in the system) should perform more work in the overlay than less powerful ones.

M. Castro, M. Costa, and A. Rowstron, "Debunking some myths about structured and unstructured overlays," in NSDI'05, Boston, MA, USA, 2005, presents a modification of A. Rowstron and P. Druschel, "Pastry: Scalable, distributed object location and routing for large-scale peer-to-peer systems," in IFIP/ACM International Conference on Distributed Systems Platforms (Middleware), 2001, pp. 329-350, which accommodates heterogeneity by biasing the indegree of the nodes by their capability. J. Sacha, J. Dowling, R. Cun-ningham, and R. Meier, "Discovery of stable peers in a self-organising peer-to-peer gradient topology," in Proceedings of the 6th IFIP International Conference on Distributed Applications and Interoperable Systems, 2006, pp. 70-83, propose so called gradient topology to connect the highest utility peers to the "core" of the system. Peers get information about the utility values U of other peers through gossiping and then select nodes that have values similar to their own as neighbors. This leads to the gradient structure of the topology: peers with a lower value for U are located farther from the core.

In [1] it was shown how to calculate an optimal operating point A from all system parameters such as the number N of peers, their capacity C, load and number F of shared objects with a global view on the DHT system. However, in a practical P2P system environment, no global knowledge on the system status is available. Instead, it is only possible to rely on partial views of single peers on the system.

Hence, it is an object of the present invention to provide an algorithm to achieve and maintain cost-optimal operation of a two-layer hierarchical DHT.

The object of the present invention is achieved by networking a capable entity according to clam 1, a network capable entity according to claim 18, a method according to claim 19, a method according to claim 20, and a computer program according to claim 21.

The present invention is based on the finding that a cost-optimal operation of a hierarchical P2P network can be achieved and maintained by providing entities capable of networking, i.e. e.g. superpeers (that can become peers), that run an algorithm to decide, based on their partial view on a set of system wide parameters describing the current system status, whether it is necessary to increase or decrease the existing number of superpeers $N_{sp}$ in the system.

The present invention provides a networking capable entity comprising an estimator for estimating a superpeer adjustment from an existing superpeer number $N_{sp}$ to a necessary superpeer number $N^*_{sp}$ of required superpeers in a hierarchical peer-to-peer network, the superpeer adjustment depending on a result of a comparison of an estimate for an actual system load factor L and a desired system load factor $L_{des}$, wherein the desired system load factor $L_{des}$ is set to a value smaller than 100%, and wherein the estimate for the actual system load L depends on an estimate for an existing superpeer number $N_{sp}$ of actually existing superpeers in the hierarchical peer-to-peer network. Further, the networking capable entity comprises a controller for promoting a different networking capable entity to become a superpeer in case the necessary superpeer number $N^*_{sp}$ is greater than the estimate for the existing superpeer number $N_{sp}$, i. e. $N^*_{sp} > N_{sp}$.

The present invention further provides a networking capable entity comprising an estimator for estimating a superpeer adjustment from an existing superpeer number $N_{sp}$ to a necessary superpeer number $N^*_{sp}$ of required superpeers in a hierarchical peer-to-peer network, the superpeer adjustment depending on a result of a comparison of an estimate for an actual system load factor L and a desired system load factor $L_{des}$, wherein the desired system load factor $L_{des}$ is set to a value smaller than 100%, and wherein the estimate for the actual system load L depends on an estimate for an existing superpeer number $N_{sp}$ of actually existing superpeers in the hierarchical peer-to-peer network. Further, the networking capable entity comprises a controller for terminating a superpeer characteristic of the networking capable entity, in case the necessary superpeer number $N^*_{sp}$ is smaller than the estimate for the existing superpeer number $N_{sp}$, i.e. $N^*_{sp} < N_{sp}$.

The present invention furthermore provides a method for operating a networking capable entity, the method comprising the following steps: estimating a superpeer adjustment from an existing superpeer number $N_{sp}$ to a necessary superpeer number $N^*_{sp}$ of required superpeers in the hierarchical peer-to-peer network, the superpeer adjustment depending on the result of a comparison of the estimate for the actual system load factor L and the desired system load factor $L_{des}$, wherein the desired system load factor $L_{des}$ is set to a value smaller than 100%, and wherein the estimate for the actual system load L depends on the estimate for the existing superpeer number $N_{sp}$ of actually existing superpeers in the hierarchical peer-to-peer network, and promoting a different networking capable entity to become a superpeer in case the necessary superpeer number $N^*_{sp}$ is greater than the estimate for the existing superpeer number $N_{sp}$, i.e. $N^*_{sp} > N_{sp}$.

Furthermore, the present invention provides a method for operating a networking capable entity, the method comprising the following steps: estimating a superpeer adjustment from an existing superpeer number $N_{sp}$ to a necessary superpeer number $N^*_{sp}$ of required superpeers in the hierarchical peer-to-peer network, the superpeer adjustment depending on the result of a comparison of the estimate for the actual system load factor L and the desired system load factor $L_{des}$, wherein the desired system load factor $L_{des}$ is set to a value smaller than 100%, and wherein the estimate for the actual system load L depends on the estimate for the existing superpeer number $N_{sp}$ of actually existing superpeers in the hierarchical peer-to-peer network, and terminating a superpeer characteristic of the network capable entity, in case the necessary superpeer number $N^*_{sp}$ is smaller than the estimate for the existing superpeer number $N_{sp}$, i.e. $N^*_{sp} < N_{sp}$.

Finally, the present invention provides a computer program having a program code for performing at least one of the inventive methods, when the computer program runs on a computer and/or microcontroller.

The present invention is based on the assumption that there is a load balancing algorithm running in the background for balancing the load that is generated in a DHT uniformly over the participating peers. A load balancing algorithm in a Chord-based peer-to-peer system should ensure that all superpeers in the system show approximately the same load factor, independent of their individual load limit $C^n_{max}$. Further, the load factor $LF_n$ of all superpeers should be close to 100% at any time in order to have as few superpeers as possible and thus a minimal total network traffic.

Such a load balancing algorithm for a hierarchical peer-to-peer network is for example described in the European patent application 06024317.7. This load balancing algorithm is based on assignment of leafnodes, at the time of their arrivals, to least loaded superpeers. For this to be possible, superpeers must be aware of one another's load. This is achieved by requiring each superpeer to piggyback its own load level in messages exchanged with its neighboring superpeers. These messages include the usual probes of entries in routing tables as well as query messages. The information on load levels is communicated only to direct neighbors in the DHT graph, i.e. it is not spread any further through the graph. When a node joins a network, it is assumed that it contacts a randomly chosen superpeer. Knowing load levels of its neighboring superpeers, the contacted superpeer selects a neighboring superpeers with the lowest load and forwards the request to it. This neighboring superpeer handles the request further. When a superpeer is found with a load level lower than load levels of all its neighbors, it accepts the joining node as its leaf. To avoid possible loops, a time-to-live is introduced into the join messages. It is assumed in this load balancing algorithm that the piggybacked load levels refer to the aforementioned load factors $LF_n$ (n=1,2,...,N). Thus, the load balancing algorithm brings the load factors $LF_n$ (n=1,2,...,N) to approximately the same levels. In this way, every superpeer can keep track of its own load, and thus an approximate (hypothetic) quantity called system load factor L.

Embodiments of the present invention allow a networking capable entity, such as a superpeer, to adjust its own load in order to get as close as possible to a pre-specified threshold $L_{des}$ for the system load factor L. To determine the needed adjustment $\Delta N_{sp}$, every superpeer needs to compute how the highest load curve, previously discussed referring to Fig. 8, depends on the superpeer fraction $\alpha$. Once a superpeer has computed the superpeer adjustment $\Delta N_{sp}$, it does the following: If new superpeers are needed, i.e. $\Delta N_{sp} > 0$, it promotes on average $|\Delta N_{sp}|/N_{sp}$ leafnodes to become superpeers. If there are too many superpeers in the system, i.e. $\Delta N_{sp} < 0$, each superpeer leaves the system with probability $|\Delta N_{sp}|/N_{sp}$ and rejoins as a leaf.

Such a dynamic cost-optimization according to embodiments of the present invention, provides a number of advantages in addition to the general advantages of a hierarchical peer-to-peer system mentioned above. For a network operator of a communication network hosting such a hierarchical peer-to-peer overlay network, costs can be reduced to a minimum dynamically adapting to the current network situation, i.e. the current system load factor L. Note that the focus is on the total cost of operation from a network operator's view point, who is willing to minimize its expense while keeping the overlay network in a stable operation mode. This is especially necessary when network traffic is not charged any longer by data consumption, but on a flatrate basis, as currently emerging even in mobile networks. There are other approaches, for example J. Li, J. Stribling, R. Morris, and M. F. Kaashoek, "Bandwidth-efficient management of DHT routing tables," in NSDI, Boston, USA, 2005, that are not focusing on a reduction of the total peer-to-peer overlay overhead, but assume a certain available data rate at each peer that can be used in favorable situations to allow a faster search by adapting the overlay routing table at the cost of additional maintenance overheads, filling the available data rate at each peer.

Embodiments of the present invention are not only advantageous for an operator, but also a user is presented with a high quality DHT as the dynamic maintenance algorithm according to embodiments of the present invention, puts as many high-layer superpeers in the system as needed to avoid critical, i.e. overload situations.

A further advantage for operators and users is the self-organization paradigm implemented by embodiments of the present invention. An operator does not have any extra maintenance overhead, while being able to keep the overlay in a stable operation mode and at the same time saving costs. This is also true for the user who does not have to worry his computer becoming a superpeer might break down due to overload. There is no additional overhead introduced as all additional parameters exchanged between the peers are piggybacked with periodic DHT maintenance messages and search requests.

Preferred embodiments of the present invention are described in detail with respect to the following figures:

Fig. 1 shows a block diagram of a networking capable entity according to an embodiment of the present invention;

Fig. 2 shows a flow chart of a method for operating a networking capable entity according to an embodiment of the present invention;

Fig. 3 shows simulation results for a number of superpeers over time obtained with an algorithm according to an embodiment of the present invention;

Fig. 4 shows a simulation result depicting a system load over time obtained with an algorithm according to embodiments of the present invention;

Fig. 5 shows a typical load curve of a single peers load level obtained with an algorithm according to an embodiment of the present invention;

Fig. 6 shows an exemplary layered structure of a peer-to-peer overlay network and its underlying physical network;

Fig. 7 shows a possible hierarchical peer-to-peer system with superpeers forming a Chord-ring with nodes attached to each superpeer; and

Fig. 8 shows highest load factor and cost curves versus superpeer fraction $\alpha$.

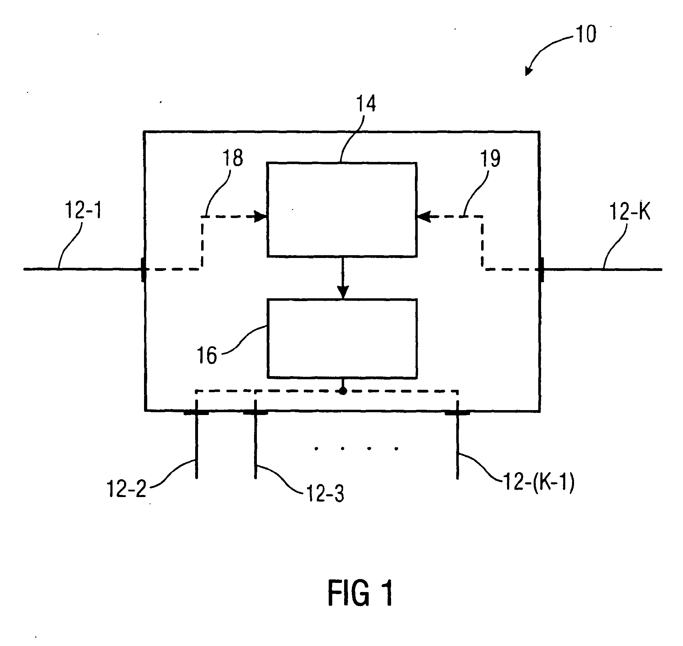

A block diagram of a networking capable entity 10 according to an embodiment of the present invention is depicted in Fig. 1.

The networking capable entity 10 comprises I/O-terminals (I/O = Input/Output) 12-k (k=1,2,...,K) to connect the networking capable entity 10 to other networking capable entities of the hierarchical peer-to-peer network system. The networking capable entity 10 further comprises an estimator 14 coupled to a controller 16.

In case the networking capable entity 10 functions as a superpeer, the estimator 14 is, according to embodiments of the present invention, configured to estimate a necessary superpeer number $N^{*}_{sp}$ of required superpeers in the hierarchical peer-to-peer system, wherein the necessary number of required superpeers $N^{*}_{sp}$ depends on an actual or current network situation. To be able to estimate the necessary superpeer number $N^{*}_{sp}$ the estimator 14 is further configured to estimate an existing superpeer number $N_{sp}$ of actually or currently existing superpeers in the hierarchical peer-to-peer network. The existing superpeer number $N_{sp}$ is estimated by the estimator 14 based on the algorithm from A. Binzenhofer, D. Staehle, and R. Henjes, "On the Fly Estimation of the Peer Population in a Chord-based peer-to-peer System," in 19th International Teletraffic Congress (ITC19), Beijing, China, 2005, hereinafter referred to as [2]. [2] proposes a Chord-specific algorithm to estimate the size of the network.

Estimating the existing superpeer number $N_{sp}$ in Chord-based P2P networks mostly relies on measuring a superpeer density in a local superpeer's neighborhood and extrapolating it to the ID space of the whole Chord-ring. In [2] it is shown that the probability that a superpeer $z + 1$ following superpeer $z$ is

$$P(z+1,i) \approx \left(1 - \frac{N_{sp}}{2^m}\right)^i \cdot \frac{N_{sp}}{2^m}, \qquad (1)$$

where $2^m$ is the size of the ID space and $N_{sp}$ is the existing superpeer number in the ring. In [2] it is concluded that the interval $I(z)$ between a superpeer and its next neighbor superpeer is approximately geometric $I(z) \sim \text{geom}(p)$ with parameter $p = N_{sp}/2^m$. By using a Maximum Likelihood Estimation (MLE), it is possible to approximate the geometric distribution's parameter $p$ and so consequently the number of superpeers $N_{sp} = p \cdot 2^m$.

Every superpeer in the network maintains not only its direct successor in its routing table but a whole list of successors to circumvent a failure if the direct neighbor is unreachable. This list provides realizations of the random variable $I$ and allows to estimate the parameter $p$.

Simulation results of the algorithm presented in [2] show a relatively high variance of the estimated existing super-peer number within the range of $0.5N_{sp}$ to $2N_{sp}$.

In order to reduce the variance of the estimations, estimations of neighboring superpeers are taken into account according to embodiments of the present invention. This is done by piggybacking the estimated existing superpeer number on exchanged maintenance messages (e.g. FINGER_PING or STABILIZE messages) that have to be sent anyway and therefore can be used without introducing higher costs.

According to embodiments of the present invention every superpeer comprises a FIFO-buffer (FIFO = First-In-First-Out) for a FIFO-list of the last x estimated existing superpeer numbers and sends updates of estimated existing superpeer numbers with a maximum rate of one message per second. This limitation is introduced in order to prevent superpeers with a high traffic volume from tampering the superpeers' estimations. A superpeer with high traffic would otherwise send out more estimations than a low traffic superpeer. In this way, the estimations of a high traffic superpeer would gain more importance in the neighboring superpeers' estimations than it deserved and so worsen the estimations.

The results of the inventive existing superpeer number estimation algorithm show a quite good performance with a scenario dependent deviation of +1% to +3%. A time lag of 13 up to 60 seconds between the actual existing superpeer number $N_{sp}$ and the estimated existing superpeer number can be observed. This lag is caused by the way the estimator 14 works: Since it is based on a superpeers' successor list, a change in the network size can be taken into account when the successor lists are updated. This change of the network structure takes some time to propagate and hence there is a lag in the estimations.

For the current network situation considered by the estimator 14, the aforementioned predefined desired system load factor $L_{des}$ is considered according to an embodiment of the present invention. Thereby, $L_{des}$ can be set to a value between 80% and 120%. In preferred embodiments of the present invention, the desired system load factor $L_{des}$ is set to a value smaller than 100%, for example $L_{des} = 90\%$. There are two reasons for selecting a desired system load factor $L_{des}$ that is slightly below 100%: First, additional traffic load for superpeers generated by churn and by load balancing in the top-level DHT is not considered in the underlying theoretical model. Secondly, a buffer for an unexpected increase of a superpeer's traffic load is provided, e.g. caused by a bursty look-up traffic.

The controller 16 is, according to an embodiment of the present invention, configured for promoting a different networking capable entity connected to the networking capable entity 10 via one of the I/O terminals 12-k (k=1,2,...,K) to become a superpeer in case the necessary superpeer number $N^*_{sp}$ estimated by the estimator 14 is greater than the existing superpeer number $N_{sp}$. In other words, the networking capable entity 10 in this case may be seen as a superpeer that promotes, with a certain probability, one of its attached peers to become a new superpeer in the hierarchical peer-to-peer system in case there is a need for more superpeers than currently available.

According to a further embodiment of the present invention, the controller 16 is adapted for terminating a superpeer characteristic of the networking capable entity 10, in case the necessary superpeer number $N^*_{sp}$ is smaller than the existing superpeer number $N_{sp}$. In other words, in this embodiment, the controller 16 can degrade a superpeer from its superpeer status to a normal peer, in case the existing superpeer number $N_{sp}$ exceeds the required superpeer number $N^*_{sp}$ regarding the desired system load level $L_{des}$ aimed for in the hierarchical peer-to-peer system.

The estimator 14 is further adapted to estimate a mean number $\lambda$ of look-up messages generated on average by a super-peer in the DHT system. When a leafnode performs a look-up, it sends a query message to its attached superpeer. The attached superpeer resolves the look-up in the superpeers Chord overlay and returns the result to the leafnode. To estimate the mean number $\lambda$ of look-up messages generated in average by one superpeer, the estimator 14 has to have knowledge of the existing superpeer number $N_{sp}$ and an average system look-up or query rate $R$.

The system look-up or query rate $R$ is the number of queries to be resolved by the system per time unit. A simple way to estimate the average look-up rate $R$ of the whole hierarchical peer-to-peer systems is to simply average the networking capable entity's 10 own look-up rate $R_n$ (n=1,2,...,$N_{sp}$). Every superpeer measures its local query rate $R_n$ (n=1,2,...,$N_{sp}$) it observes by counting the incoming QUERY messages per time unit it has to answer and then estimates the system's global query rate $R$ by evaluating $R = N_{sp} \cdot R_n$. The estimate for $R$ can further be improved by obtaining respective values from neighboring superpeers through piggybacking and computing an average value $R'$ over own and received values $R_n$ (n=1,2,...,$N_{sp}$) from neighbors. According to embodiments of the present invention every networking capable entity 10 for this reason comprises a FIFO-buffer for a FIFO-list of the last x estimated look-up rates and can also send updates of estimated look-up rates to neighboring superpeers.

Resulting estimations show a deviation of about 3% to 5% compared to the query rate $R$ observed using a global view on the system.

In case of a Chord system as DHT system, the mean amount of system look-up messages or the look-up traffic $\lambda$ is given by multiplying the system look-up rate R with the average number of messages generated per look-up. The resolution of a look-up request in a Chord system can be divided into three steps: First, the responsible superpeer is resolved in the superpeers' Chord ring. This generates $\log_2 N_{sp}$ messages on average (on average, 1/2 $\log_2 N_{sp}$ hops are required to resolve the responsible peer, and every hop requires two messages assuming an iterative routing scheme). Then, the look-up request is forwarded to the responsible superpeer (1 message), and finally, the result is transmitted back to the querying peer (1 message). Consequently, a super-peer's or networking capable entity's 10 estimator 14 can calculate the current system look-up traffic per superpeer by

$$\lambda = (2 + \log_2 N_{sp}) \cdot \frac{R}{N_{sp}} \qquad . \qquad (2)$$

Further, the estimator 14 needs to estimate mean number of maintenance traffic messages a superpeer generated in the underlying DHT system. In case the underlying DHT system is a Chord system, maintenance traffic is generated by the PING-PONG algorithm between leafnodes and the superpeer, by the STABILIZE algorithm, the FIXFINGER algorithm and the REPUBLISH algorithm in the superpeers Chord overlay. Hence, the total traffic load for superpeers is composed of look-up traffic $\lambda$, maintenance traffic $\mu$, comprising PING-PONG traffic, STABILIZE traffic and FIXFINGER traffic, and REPUBLISH traffic p.

The maintenance traffic $\mu$ for superpeers is generated by the STABILIZE and the FIXFINGER algorithms for maintaining the superpeers' Chord DHT, and by pinging leafnodes to detect leafnode failures. This is done by a periodical PING-PONG algorithm. Every leafnode runs the PING-PONG algorithm periodically every $T_{ping}$ seconds. It sends a PING message to its superpeer and the superpeer answers with a PONG message. Since an appropriate node balancing algorithm that spreads all leafnodes uniformly over the superpeers is assumed, this generates

$$m_{pingpong} = \frac{M-1}{T_{ping}} \qquad (3)$$

PING-PONG messages per superpeer on average, as

$$M = \frac{N}{N_{sp}} \qquad (4)$$

is the mean number of leafnodes attached to a superpeer. Hence, M denotes a ratio of the overall number N of nodes participating in the hierarchical peer-to-peer network to the existing number of superpeers $N_{sp}$. The total number of nodes N is the sum of the existing number of superpeers $N_{sp}$ and the number of leafnodes in the network. M is considered a group size. The group size M is thereby the number of leaves a superpeer has to manage plus one (the superpeer itself). To be able to estimate the number of PING-PONG messages $m_{pingpong}$ the estimator 14 is adapted to estimate the group size M. In order to get an estimate for M that is close to the systems mean value, again a FIFO list is introduced within the networking capable entity 10 for the estimates of M received by the networking capable entity's neighbors, as indicated by the dotted lines 18, 19 in Fig. 1. This is advantageous, since due to the system's load balancing algorithm, the number of leafnodes per superpeers is different according to their capabilities.

Simulation results show very accurate estimations in a join phase and a slight overestimation (introduced by the overestimation of the number of superpeers) of about 3% in a churn and leave phase.

According to further embodiments of the present invention, a simple estimate for M can be obtained by simply determining the own group size M of the networking capable entity 10, i.e. determining the number of leafnodes attached to the networking capable entity or the superpeer 10.

A further part of the mean amount of maintenance messages to be estimated by the estimator 14 are messages caused by the STABILIZE algorithm, which is periodically run every $T_{stab}$ seconds. STABILIZE requires three messages: a REQUESTPREDECESSOR message, the corresponding RESPONSEPREDECESSOR message and finally a NOTIFY message. An initiating superpeer sends a request predecessor message to its successor, the successor responds with a response predecessor message and finally the initiating peer sends a notify message. Therefore, the number of sent and received STABILIZE messages for any superpeer n (n=1,2,...,$N_{sp}$) is given by

$$m_{stab} = \frac{3}{T_{stab}} \quad . \quad (5)$$

Further, every superpeer in a Chord system runs the FIXFINGER algorithm periodically every $T_{fix}$ seconds for each of its $\log_2 N_{sp}$ fingers (assuming a fully populated ID space). However, an improved FIXFINGER algorithm, where each superpeer thereby generates $2\log_2 N_{sp}$ messages on average, is used in embodiments of the present invention that sends a PING message to a finger peer, and initiates a finger look-up only when no PONG message is received, or when the finger peer indicates a new peer being responsible for this finger ID. Resulting, finger look-ups can be avoided when the system is in a steady state and the number of sent and received fixed finger messages for any superpeer n (n=1,2,...,$N_{sp}$) is given by

$$m_{fix} = \frac{2\log_2 N_{sp}}{T_{fix}} \quad . \quad (6)$$

Summing up equations (3), (5) and (6), yields

$$\mu = \frac{3}{T_{stab}} + \frac{2\log_2 N_{sp}}{T_{fix}} + \frac{M-1}{T_{ping}} \quad . \quad (7)$$

As mentioned before, another aspect of maintenance traffic is due to the REPUBLISH algorithm, in case the DHT system is arranged as a Chord system. Every superpeer runs the REPUBLISH algorithm periodically every $T_{rep}$ seconds for every shared object of the superpeer itself and its leafnodes. Republishing a shared object corresponds to a Chord look-up for the object's ID. Therefore, it generates on average $\log_2 N_{sp}$ messages. It is assumed here that every super-peer manages the same number of objects shared by the superpeer itself and its leafnodes, i.e.

$$\text{Shared objects managed by one superpeer} = \frac{F}{N_{sp}} = \frac{\sum_{n=1}^{N} f_n}{N_{sp}} \quad . (8)$$

In equation (8), F denotes the number of shared items in the whole hierarchical peer-to-peer system. Hence, $F_{av} = F/N_{sp}$ denotes the average number of shared objects managed by one superpeer.

The number of shared objects or object references is also determined locally by each networking capable entity 10 and distributed to the neighboring networking capable entities. By building the mean value $F_{av}$ of the number of shared objects, an estimation of the system's mean value is obtained according to $F = N_{sp}*F_{av}$.

Simulations show an overestimation of F of about 5% to 6% mainly introduced by the overestimated existing number of superpeers $N_{sp}$.

The REPUBLISH traffic ρ is necessary to periodically update the information about shared items in the superpeers' DHT, as peers may fail and thus references may be lost. Republishing a shared item is similar to the look-up of a shared item. Consequently, the republish traffic can be computed simply by using the above analysis of look-up traffic, and by replacing the system look-up rate R by the total number of shared items F that are republished every $T_{rep}$ seconds. Consequently, a superpeer can estimate the current REPUBLISH traffic ρ in the system by

$$\rho = (2 + \log_2 N_{sp}) \cdot \frac{F}{T_{rep}} \quad . \quad\quad\quad (9)$$

Again, the value F has to be estimated by the estimator 14. As mentioned before, this can be done by taking the own number $f_n$ (n=1,2,...,$N_{sp}$) of shared objects of the networking capable entity 10 into account. Since the load balancing algorithm is assumed to run in the background, such an estimate only considering own values is considered to yield already good estimates for overall system parameters. To further improve the estimate for the number of shared items, the networking capable entity 10 might, according to embodiments of the present invention, also compute mean values over own values, and those obtained from neighboring superpeers through piggybacking.

To compute an estimate for a current system load factor L, the estimator 14 further needs an estimate for the mean capacity C per superpeer of the hierarchical peer-to-peer system. The mean superpeer capacity C is determined by distributing the local superpeers capacities via piggybacking and building the mean value over the last x received capacities, as described before. The resulting values are very accurate with a deviation of less than 0.1%. This results from the independence of other estimations (previous values had to be computed using $N_{sp}$) which increased the result's variance. Again, a simple estimate can also be obtained by taking into account only own values of the networking capable entity 10.

Having estimated estimates for $\lambda$, $\mu$, $\rho$ and C, the estimator 14 may compute an estimate for the system load factor L according to

$$L = \frac{\lambda + \mu + \rho}{C} \quad . \quad\quad\quad (10)$$

The computed estimate of the current system load factor L according to equation (10) can then be compared to the desired network situation, i.e. to the desired system load factor $L_{des}$. Based on the estimates for $N_{sp}$, M, R, F and C and the result of the comparison of L and $L_{des}$, the estimator 14 may compute the necessary superpeer number $N^{*}_{sp}$ such that L is in the range, or equal to $L_{des}$, e.g. $L_{des}$ = 90%. The difference $\Delta N_{sp} = (N^{*}_{sp} - N_{sp})$ denotes the superpeer adjustment. For $\Delta N_{sp} > 0$, new superpeers are needed and the controller 16 of the network capable entity 10 promotes on average $|AN_{sp}|/N_{sp}$ leafnodes to become superpeers. If $\Delta N_{sp} < 0$, controller 16 terminates the superpeer characteristics of the networking capable entity 10 with probability $|AN_{sp}|/N_{sp}$ to leave the system and to rejoin as a leafnode.

It is assumed that the timers $T_{stab}$, $T_{fix}$, $T_{rep}$ and $T_{Ping}$ are DHT design parameters as they are known in advance as such. Besides them, there are a number of other parameters ($N_{sp}$, M, R, F, C) in the algorithm which characterize the current state of the system. They are not given in advance, but need to be estimated by the estimator 14. The existing superpeer number $N_{sp}$ is estimated using an improved version of the algorithm described in [2]. The group size M, the system look-up rate R, the mean number of shared objects F and the mean capacity C are all estimated by the superpeers by computing mean values over own values and/or those obtained from neighboring superpeers through piggybacking.

The estimation of the existing superpeer number $N_{sp}$ is dependent on the correctness of the successor list. It is intuitive to assume that changing the timer values $T_{stab}$, $T_{fix}$, $T_{rep}$ and $T_{ping}$ controlling the periodical maintenance messages will influence the deviations of the estimations. To prove this assumption, several scenarios with different timer values were simulated and it was discovered that e.g. the change of the STABILIZE timer value $T_{stab}$ from 10 seconds to 5 seconds lead to a decrease of the deviation from about 3.5% to 0.6%. Of course, this change is bought with an increased maintenance traffic.

The query rate R as an external influence of the system also has impact on the accuracy of the estimations, since with a high query rate R, more fresh information from other peers is available at each node. Doubling the look-up rate at each node from one query per minute to two queries per minute leads to a decrease of the deviation from about 2.5% to about 0.5%.

Instead of estimating the average number of look-up messages $\lambda$, the mean number of maintenance messages $\mu$ and of estimating the average number of REPUPLISH messages $\rho$ per superpeer, respectively, the estimator 14 may also be configured to estimate the respective overall system parameters, i.e. the values $\lambda$, $\mu$ and $\rho$ multiplied by the estimated existing superpeer number $N_{sp}$. However, this has to be taken into account when computing the estimate for the system load factor L.

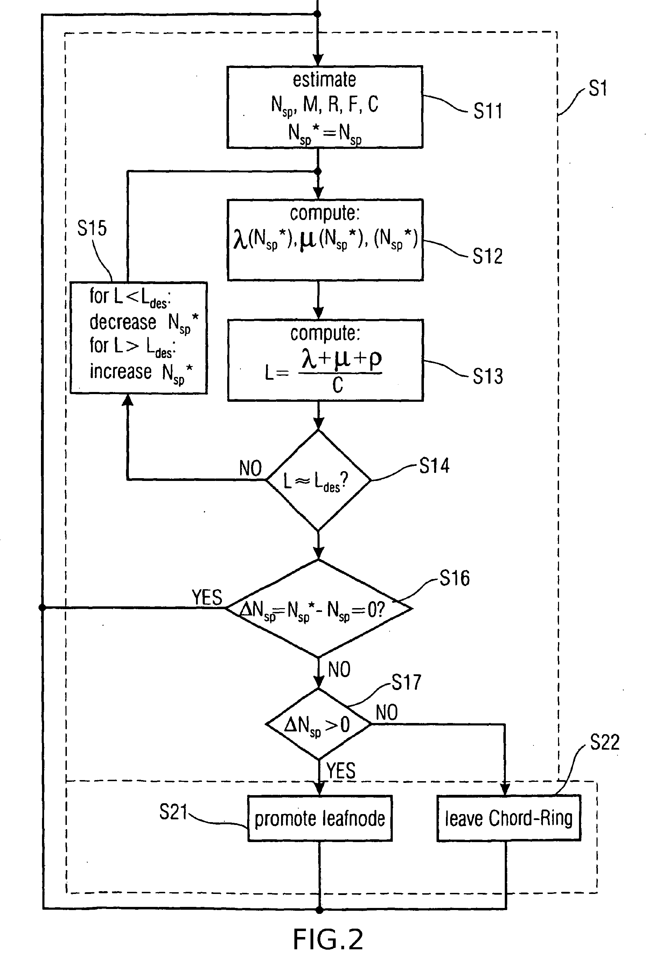

Referring now to Fig. 2, a method for operating a network capable entity 10 according to an embodiment of the present invention is described.

The method comprises a step S1 of estimating a necessary superpeer number $N^{*}_{sp}$ of required superpeers in a hierarchical peer-to-peer network, the necessary number of required superpeers depending on an actual network situation, and estimating an existing superpeer number $N_{sp}$ of actually existing superpeers in the hierarchical peer-to-peer network.

The method further comprises a step S21 for promoting a different networking capability to become a superpeer in case of the necessary superpeer number $N^*_{sp}$ is greater than the superpeer number $N_{sp}$ and a step S22 of terminating a superpeer characteristic of the network capable entity 10 in case the necessary superpeer number $N^*_{sp}$ is smaller than the existing superpeer number $N_{sp}$.

The step S1 of estimating can be further divided into substeps. In a first substep S11, the existing superpeer number $N_{sp}$, the group size M, the system look-up rate R, the mean number of shared objects F and the mean capacity C are all estimated by computing mean values over own values and/or computing mean values over values obtained from neighboring superpeers through piggybacking, as described previously. The required superpeer number $N^*_{sp}$ is initially set equal to the existing superpeer number $N_{sp}$ in step S11. In a next substep S12, using the estimated system parameters ($N_{sp}$, M, R, F) from substep S11, the values $\lambda$, $\mu$ and $\rho$ are computed according to equations (2), (7) and (9). In a next substep S13, the current system load factor L is computed using the values $\lambda$, $\mu$, $\rho$ from substep S12 and C according to equation (10).

Having computed the current system load factor L, it can be compared to the desired system load factor $L_{des}$ in a further substep S14. In case the current system load factor L is not within a tolerance range of the desired system load factor $L_{des}$, the tolerance range e.g. being $0.9L_{des} < L < 1.1L_{des}$, a superpeer adjustment has to take place. In other words, a superpeer adjustment is needed in case e.g. $L < 0.9L_{des}$ or $L > 1.1L_{des}$, with $L_{des}$ e.g. being 90%. If $L < 0.9L_{des}$ a new superpeer number has to be lower than $N_{sp}$. If $L > 1.1L_{des}$ the new superpeer number has to be greater than $N_{sp}$. In both cases, the required superpeer number is obtained by gradually incrementing (for $L > L_{des}$) or decrementing (for $L < L_{des}$) $N^*_{sp}$ in substep S15. The respective resulting system load is again calculated in substeps S12 and S13 based on equation (10) in every iteration. This is done until the estimated system load factor L falls within the specified tolerance range of the desired load factor $L_{des}$, i.e. $0.9L_{des} < L < 1.1L_{des}$. If this is the case $N^*_{sp}$ denotes the required superpeer number. It is determined in step S17, whether the superpeer adjustment $\Delta N_{sp} = N^*_{sp} - N_{sp}$ is greater than zero. If this is the case, there is a need for new additional superpeers in the hierarchical peer-to-peer system. Hence, in step S21, a different network capable entity is promoted to become a superpeer with probability $|\Delta N_{sp}|/N_{sp}$ by the network capable entity 10 such that $\Delta N_{sp}$ peers are promoted to become superpeers within the overall peer-to-peer network system. In case substep S17 yields that the superpeer adjustment $\Delta N_{sp}$ is smaller than zero, the superpeer characteristic of the networking capable entity 10 is terminated with probability $|\Delta N_{sp}|/N_{sp}$ such that $\Delta N_{sp}$ superpeers are degraded to normal peers regarding the overall peer-to-peer system.

Alternatively to performing the superpeer adjustment in case the current system load factor L is not within a tolerance range of the desired system load factor $L_{des}$, it is also possible, according to embodiments of the present invention, to always compute the superpeer adjustment $\Delta N_{sp}$ by by gradually incrementing (for $L > L_{des}$) or decrementing (for $L < L_{des}$) $N_{sp}$ or $N^*_{sp}$, irrespective whether the current system load factor L is within the tolerance range of the desired system load factor $L_{des}$ or not, and to only promote or terminate superpeers if $|\Delta N_{sp}|$ is greater than a predefined threshold, the threshold depending on the system size, i.e. on N or $N_{sp}$.

The method explained referring to Fig. 2 can be executed periodically, wherein the time period for its application depends on the dynamics of the hierarchical peer-to-peer system.

A prerequisite for the proper operation of this algorithm is that, when promoting a leafnode to a superpeer, a leafnode with a high cost limit $C_n^{max}$ is chosen. Again, this information is distributed among superpeers by piggybacking. More precisely, every superpeer extends its sent messages with the address and the cost limit of its most capable leafnode, and, when deciding that a leafnode has to be promoted, a superpeer uses this information in order to promote the currently most capable leafnode it knows.

After embodiments of the present invention have been explained in detail referring to Figs. 1 and 2, some experimental results shall be presented in the following that were obtained from simulating multiple independent scenarios with a number of peers ranging from N = 1.000 to N = 25000.

Each peer is modeled by assigning different values for session duration $t_{online}$, lookup rate $r_n$ and number of shared objects $f_n$ (n=1,2,...,N). These values are exponentially distributed around a specified mean value. Tested mean values for $t_{online}$ are 5 minutes, 15 minutes, 30 minutes and one hour, respectively. For $r_n$, mean values of 12*min*, 2*min*, 1*min* and 15*min* is assumed, respectively. The mean value for $f_n$ is set to 20.

A cost limit for every peer in terms of uploaded messages per second is specified based on the following assumptions:

1) The upload bit rate ranges from 50 kbit/s (modem) to 500 kbit/s (DSL).

2) The mean message size is 500 Bytes.

3) Peers spend 10% of their upload capacity for overlay participation.

Thus, a uniformly distributed upload limit is assigned between 1 and 13 messages per second to every peer. Note that assumption 3) ensures sufficient remaining bandwidth for other networking tasks such as file transfers. Additionally, using 10% of upload capacity for overlay participation allows a (temporarily) increased load level of more than 100% without overloading the affected peer. Such temporarily increased load levels can happen from time to time, e.g. due to a bursty lookup traffic.

The following system-wide parameters were used throughout the simulations:

| Parameter | Explanation |
|---|---|
| NUMBER OF BITS = 16 | The length of the Chord identifiers |
| WINDOW SIZE = 100 | Each peer computes the load by measuring time needed to send this many messages, i.e., dividing WINDOW SIZE by the measured time |
| DECISION THRESHOLD = 0.05 | It serves to avoid any actions when the system state is close to the optimal one. A superpeer leaves or promotes a leafnode only if the ratio "change in number of superpeers/estimated total number of superpeers" is above this threshold. |
| $T_{ping}$ = 5s, $T_{stab}$ = 5s, $T_{fix}$ = 30s, $T_{rep}$ = 300 s | Chord specific timers |

The simulation scenarios are divided into three phases: The first phase is called the "join phase" where peers join the system until the desired number of peers is reached. Then one has a "churn phase" where peers join and leave the system simultaneously. The arrival rate of peers is chosen so that the number of peers during the "churn phase" stays at a relatively constant level. Finally, in the "leave phase", the arrival rate of peers is set to 0 and the peers in the system go offline according to their negative exponentially distributed session duration. During the simulations, the existing number of superpeers $N_{sp}$ is continuously measured and compared with the optimal number $N_{opt}$. $N_{opt}$ is calculated from a global view of the system, assuming that the $N_{opt}$ most capable peers build the top-level overlay and the remaining peers are attached as leafnodes. As stated previously, an optimal superpeer ratio should lead to a system load that is between 90% and 100%. To evaluate this, the current system load factor L, i.e. the mean load factor of all superpeers, is periodically logged. To have a statistical validation of the achieved results, each scenario was simulated multiple times with different seeds for the random number generator. However, no significant change in the different simulation runs of each scenario was detected.

The evaluation results are explained with regard to one specific simulation scenario. However, is shall be emphasized that they are also valid for every other simulated scenarios. In the considered scenario, the total number of peers is 1.000, the mean value for $t_{online}$ is 30 minutes, and the mean value for $r_n$ is set to 1 lookup per minute.

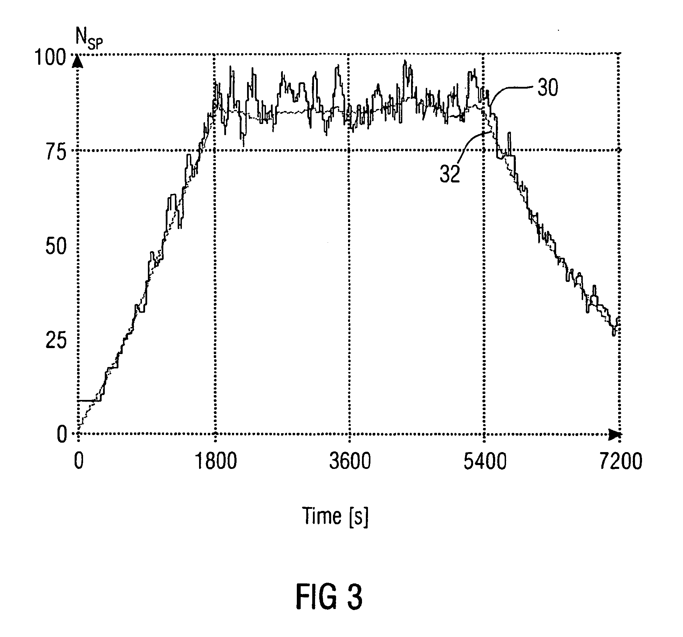

Fig. 3 shows a curve 30 of the currently existing number $N_{sp}$ of superpeers in the system. Note that this system is started with eight initially online superpeers. During the join phase (0 - 1800 s), the number $N_{sp}$ of superpeers increases as more and more superpeers are needed to handle the traffic that is generated by an increasing number N of peers in the system. In the churn phase (1800 - 5400 s), the number $N_{sp}$ of superpeers stays relatively constant.

As some superpeers leave the system due to the end of their session duration, while others leave the system or promote a leafnode based on their (sometimes wrong) estimations, a continuous small fluctuation is noticed around this constant number $N_{sp}$ of superpeers. During the "leave phase" (5400 - 7200 s) the number $N_{sp}$ of superpeers decreases as less superpeers are needed to handle the decreasing traffic load in the system.

In all simulation phases, one sees that the measured number of superpeers is always close to the optimal one (dotted line 32).

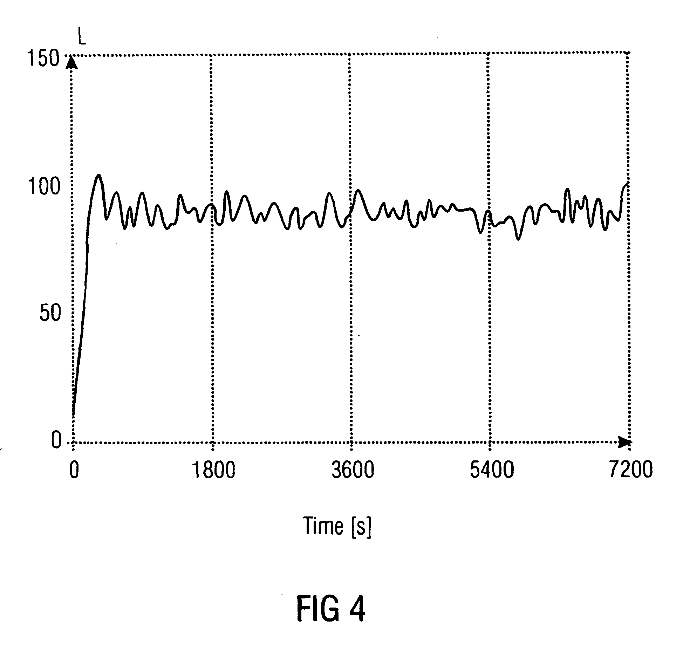

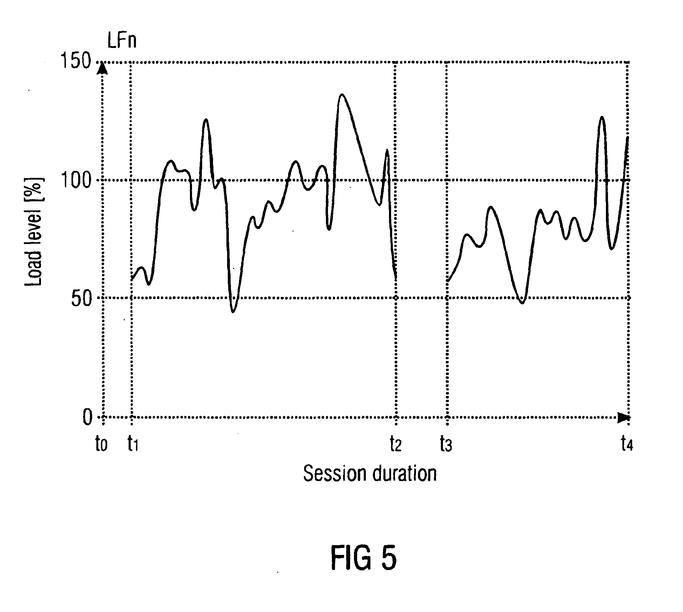

Fig. 4 depicts the system load L that is measured during the simulation. As expected, it varies around 90%, indicating that the traffic that is generated in the system but not considered in this theoretical model (churn, load balancing) has no significant effect. While Fig. 4 shows the mean load level L of all superpeers in the system, the typical curve of a single peer' s load level $LF_n$ in Fig. 5 is seen. At to, the peer joins the system as a leafnode. As it provides enough upload capacity, it is promoted to a superpeer at $t_1$, so it starts to continuously measure its load level $LF_n$. At $t_2$, the peer leaves the top-level DHT, because it assumes that there are more superpeers than needed in the system, and rejoins as a leafnode. Later, at $t_3$, it is again promoted to a superpeer. Finally the peer leaves the system at $t_4$. The load level $LF_n$ (when the peer is a superpeer) is seen to vary over time, but is, as expected, only temporarily above 100%.

There are further interesting results from the simulations that are not shown in the above Figs. First, the hierarchical system generates less network traffic than a flat DHT where all N peers are part of the Chord ring. In the above example, the total number of messages in the hierarchical system is 7.174.941, while the flat Chord system generates 7.883.201 messages in total. This corresponds to a traffic reduction of 9%. Note that the hierarchical system offers the additional benefit that most of these messages are processed by powerful superpeers. Secondly, a very low mean session duration of only 5 minutes is found that results in a too low number of superpeers, and therefore in a system load that is above 100%. The reason is that the algorithm calculates and adjusts the needed number of superpeers, but many of those superpeers leave shortly afterwards due to their short online time. As a result, one continuously has too few superpeers in the system. However, when the mean session duration raises to 15 minutes (which is still a low value), the algorithm again shows the good performance shown above.

Finally, when the peers' mean lookup rate to an extremely high value of 1 lookup every 5 seconds is specified, the number of superpeers in the system is significantly higher than the theoretical value. The reason is that in theory one always chooses the next best leafnode (with the highest capacity of all leafnodes) to become the next superpeer. As in this scenario a very high superpeers ratio is needed to handle the load, the algorithm can not always find the currently best leafnode but selects another one with lower capacity. As the mean capacity of all superpeers is thus lower than in theory, more superpeers are needed to handle the immense lookup traffic. Nevertheless, in this extreme scenario the iventive algorithm is found to provide the desired system load of approximately 90%.

Summarizing the abovementioned, peer-to-peer networks are self-organizing, distributed overlay networks enabling a fast location of a set of resources. They are realized as application layer overlay networks relying on whatever physical connectivity among the participating nodes. The basic problem addressed by a peer-to-peer network is self-organized distribution of a set of resources, the set of peers enabling the subsequent fast look-up.

A promising approach to solve this problem is the concept of structured peer to peer networks, also known as distributed hash tables (DHT). In a DHT peer collaboratively manage specific subsets of resources identified by keys from a key space, which is done in the following manner. Each peer is associated with a key taken from the key space. Given the set of peers, the key of each peer is associated with a partition of the key space such that the peer becomes responsible for managing all key resources identified by keys from the associated partitions. Typically, the key partition consists of all keys closest to the peer key in a suitable metric. The closeness of keys is measured by a distance function. To forward resource requests, peers form a routing network by taking into account the knowledge on the association of peers with key partitions. Peers typically maintain short-range links to all peers with neighboring keys and in addition a small number of long-range links to some selected distant peers. Using the routing network established in this way peers forward resource requests in a directed manner to other peers from their routing tables trying to greedily reduce the distance to the key being looked up. Most of the DHTs achieve, by virtue of this construction and routing algorithm look-up within a number of messages logarithmic in the size of the network, by using routing tables, which are also logarithmic in the size of the network.

The peer-to-peer architecture which was considered divides the participating peers into two groups: superpeers which are organized in a distributed hash table and serve as proxies to the second group, the leafnodes which are attached to them and do not participate in the DHT.

Hierarchical DHTs have been found to outperform flat DHTs with respect to scalability, network locality and forward isolation. In [1] these findings were deepened by evaluating hierarchical and flat DHTs from another perspective. That is, within a general cost based framework, which enables judging on the optimality of DHT configurations. It was found that a simple hierarchical DHT organization composed of a carefully chosen set of superpeers and leafnodes attached to them is optimal in the sense that it minimizes the usage of network resources.

Embodiments of the present invention provide a full set of algorithms to build and maintain such a hierarchical peer-to-peer system. In particular, embodiments of the present invention dynamically determine the optimal operation point of the hierarchical peer-to-peer system in terms of super-peer to leafnode ratio. The inventive algorithms are fully distributed and probabilistic with all decisions taken by the peers being based on their partial view on a set of system wide parameters. Thus, embodiments of the present invention demonstrate the main principle of self-organization. The system behavior emerges from local interactions. The simulations presented, one in a range of realistic settings, confirm a good performance of the inventive algorithms.

Although the discussed embodiments use a Chord system as DHTs, any other structured peer-to-peer protocol can also be used to achieve the similar advantages.

Embodiments of the present invention use a more stable and less costly network operation, as well as higher forward resilience. Thus, it has a strong economic impact on the network as a whole.

Moreover, depending on certain implementation requirements of the inventive methods, the inventive methods can be implemented in hardware or in software. The implementation can be performed using a digital storage medium, in particular a disc or a CD having electronically readable control signals stored thereon, which can cooperate with a programmable computer system, such that the inventive methods are performed. Generally, the present invention is, therefore, a computer program product with a program code stored on a machine readable carrier, the program code being configured for performing at least one of the inventive methods, when the computer program product runs on a computer. In other words, the inventive methods are, therefore, a computer program having a program code for performing the inventive methods, while the computer program runs on a computer and/or a microcontroller.

**Claims**

1. Networking capable entity (10), comprising:

an estimator (14) for estimating a superpeer adjustment from an existing superpeer number ($N_{sp}$) to a necessary superpeer number ($N^*_{sp}$) of required superpeers in a hierarchical peer-to-peer network, the superpeer adjustment depending on a result of a comparison of an estimate for an actual system load factor (L) and a desired system load factor ($L_{des}$), wherein the desired system load factor ($L_{des}$) is set to a value smaller than 100%, and wherein the estimate for the actual system load (L) depends on an estimate for an existing superpeer number ($N_{sp}$) of actually existing superpeers in the hierarchical peer-to-peer network; and
a controller (16) for promoting a different networking capable entity to become a superpeer in case the necessary superpeer number ($N^*_{sp}$) is greater than the estimate for the existing superpeer number ($N_{sp}$).

2. Networking capable entity according to claim 1, wherein the networking capable entity is part of a hierarchical peer-to-peer system with load balancing for balancing load that is generated in the hierarchical peer-to-peer system uniformly over participating superpeers.

3. Networking capable entity according to claim 1 or 2, wherein superpeers of the hierarchical peer-to-peer system are a arranged in a Chord network.

4. Networking capable entity according to one of the preceding claims, wherein the estimator (14) is configured to estimate the existing number of superpeers ($N_{sp}$) based on a geometrically distribution parameter p of a length of an interval between an ID of the networking capable entity (10) and an ID of a direct successor of the networking capable entity (10).

5. Networking capable entity according to one of the preceding claims, wherein the estimator (14) is configured to use a system load factor (L) as the actual network situation, wherein the system load factor (L) denotes a ratio between an average peer cost and a maximum peer cost in a load balanced hierarchical peer-to-peer system.

6. Networking capable entity according to one of the preceding claims, wherein the estimator (14) is adapted to estimate an average number ($\lambda$) of look-up messages generated by a superpeer, to estimate a mean number ($\mu$) of maintenance messages generated by a superpeer and to estimate an average number ($\rho$) of REPUPLISH messages per superpeer.

7. Networking capable entity according to claim 6, wherein the estimator (14) is adapted to estimate the average number ($\lambda$) of generated look-up messages per superpeer based on the estimated existing superpeer number ($N_{sp}$) and an estimated look-up rate (R).

8. Networking capable entity according to claim 7, wherein the estimator (14) is adapted to estimate the average number ($\lambda$) of generated look-up messages per superpeer according to

$$\lambda = (2 + \log_2 N_{SP}) \cdot \frac{R}{N_{SP}} \quad .$$

9. Networking capable entity according to claim 6, wherein the estimator (14) is adapted to estimate the average number of maintenance messages ($\mu$) per superpeer based on the estimated existing superpeer number ($N_{sp}$) and an estimated group size (M) referring to an average ratio of peers connected to a superpeer.

10. Networking capable entity according to claim 9, wherein the estimator (14) is adapted to estimate the average number ($\mu$) of maintanance messages according to

$$\mu = \frac{3}{T_{stab}} + \frac{2 \log_2 N_{sp}}{T_{fix}} + \frac{M-1}{T_{ping}} \quad .$$

wherein $T_{stab}$ denotes the time period of a Chord's STABILIZE algorithm, $T_{fix}$ denotes the time period of the Chord's FIXFINGER algorithm and $T_{ping}$ denotes the time period of the Chord's PING-PONG algorithm.

11. Networking capable entity according to claim 6, wherein the estimator (14) is adapted to estimate the average number ($\rho$) of REPUPLISH messages per superpeer, based on an estimate of a number (F) of shared objects in the hierarchical peer-to-peer network and the existing superpeer number ($N_{sp}$).

12. Networking capable entity according to claim 11, wherein the estimator (14) is adapted to estimate the number ($\rho$) of REPUPLISH messages according to

$$\rho = (2 + \log_2 N_{sp}) \cdot \frac{F}{(T_{rep} \cdot N_{sp_i})} \quad .$$

13. Networking capable entity according to one of the preceding claims, wherein the estimator (14) is adapted to estimate a mean capacity (C) per superpeer of the hierarchical peer-to-peer network and to estimate the actual network situation (L) based on the estimated average number ($\lambda$) of generated look-up messages per superpeer, the estimated average number of maintenance messages ($\mu$) per superpeer, the estimated average number ($\rho$) of REPUPLISH messages per superpeer and the estimated mean capacity (C).

14. Networking capable entity according to claim 13, wherein the estimator (14) is adapted to estimate the actual network situation (L) according to

$$L = \frac{\lambda + \mu + \rho}{C} \quad .$$

15. Networking capable entity according to one of the preceding claims, wherein the controller (16) is adapted to compare a system load factor (L) depending on the actual network situation to a desired system load factor ($L_{des}$) and to increase the necessary superpeer number ($N^*_{sp}$) compared to the existing superpeer number ($N_{sp}$) in case the current system load factor (L) is larger than the desired system load factor ($L_{des}$), and to decrease the necessary superpeer number is ($N^*_{sp}$) compared to the existing superpeer number ($N_{sp}$) in case the current system load factor (L) is lower than the desired system load factor ($L_{des}$).

16. Networking capable entity according to one of the preceding claims, wherein the estimator (14) is adapted to estimate values for an average look-up rate (R), an average group size (M), an average number of shared items (F) and an average capacity of superpeers (C) based on values specific for the said networking capable entity (10).

17. Networking capable entity according to one of the preceding claims, wherein the estimator (14) is adapted to estimate for an average look-up rate (R), an average group size (M), an average number of shared items (F) and an average capacity of superpeers (C) using related values of neighboring networking capable entities being superpeers additionally to own values for determining mean values for said values.

18. Network capable entity (10), comprising:

an estimator (14) for estimating a superpeer adjustment from an existing superpeer number ($N_{sp}$) to a necessary superpeer number ($N^*_{sp}$) of required superpeers in a hierarchical peer-to-peer network, the superpeer adjustment depending on a result of a comparison of an estimate for an actual system load factor (L) and a desired system load factor ($L_{des}$), wherein the desired system load factor ($L_{des}$) is set to a value smaller than 100%, and wherein the estimate for the actual system load (L) depends on an estimate for an existing superpeer number ($N_{sp}$) of actually existing superpeers in the hierarchical peer-to-peer network; and
a controller (16) for terminating superpeer characteristics of the network capable entity (10), in case the necessary superpeer number ($N^*_{sp}$) is smaller than the estimate for the existing superpeer number ($N_{sp}$).

**19.** Method for operating a networking capable entity, the method comprising the following steps:

estimating an existing superpeer number (S11) of actually existing superpeers in a hierarchical peer-to-peer network;

estimating an actual system load factor (L) (S13) based on the estimated existing superpeer number ($N_{sp}$);

comparing the estimate for the actual system load factor (L) to a desired system load factor ($L_{des}$), wherein the desired system load factor ($L_{des}$) is set to a value smaller than 100%,

estimating a superpeer adjustment from the existing superpeer number to a necessary superpeer number (S15) of recquired superpeers in the hierarchical peer-to-peer network based on a result of the comparison; and

promoting a different networking capable entity to become a superpeer (S21) in case the necessary superpeer number ($N^*_{sp}$) is greater than the estimate for the existing superpeer number ($N_{sp}$).

**20.** Method for operating a networking capable entity, the method comprising the following steps:

estimating an existing superpeer number (S11) of actually existing superpeers in a hierarchical peer-to-peer network;

estimating an actual system load factor (L) (S13) based on the estimated existing superpeer number ($N_{sp}$);

comparing the estimate for the actual system load factor (L) to a desired system load factor ($L_{des}$), wherein the desired system load factor ($L_{des}$) is set to a value smaller than 100%,

estimating a superpeer adjustment from the existing superpeer number to a necessary superpeer number (S15) of recquired superpeers in the hierarchical peer-to-peer network based on a result of the comparison; and

terminating superpeer characteristics of the network capable entity (S22), in case the necessary superpeer number ($N^*_{sp}$) is smaller than the estimate for the existing superpeer number ($N_{sp}$).

**21.** Computer-program for performing one of the methods according to claims 19 or 20 when the computer-program runs on a computer or microcontroller.

**Patentansprüche**

**1.** Netzwerkfähige Entität (10), die folgende Merkmale aufweist:

einen Schätzer (14) zum Schätzen einer Superpeer-Einstellung von einer bestehenden Superpeer-Anzahl ($N_{sp}$) zu einer notwendigen Superpeer-Anzahl ($N^*_{sp}$) von erforderlichen Superpeers in einem hierarchischen Peer-zu-Peer-Netzwerk, wobei die Superpeer-Einstellung von einem Ergebnis eines Vergleichs eines Schätzwerts für einen tatsächlichen Systemlastfaktor (L) mit einem gewünschten Systemlastfaktor ($L_{des}$) abhängt, wobei der gewünschte Systemlastfaktor ($L_{des}$) auf einen Wert kleiner als 100 % eingestellt ist, und wobei der Schätzwert für die tatsächliche Systemlast (L) von einem Schätzwert für eine existierende Superpeer-Anzahl ($N_{sp}$) der tatsächlich existierenden Superpeers in dem hierarchischen Peer-zu-Peer-Netzwerk abhängt; und

eine Steuerung (16) zum Fördern einer anderen netzwerkfähigen Entität, um ein Superpeer zu werden, in dem Fall, dass die notwendige Superpeer-Anzahl ($N^*_{sp}$) größer ist als der Schätzwert für die existierende Superpeer-Anzahl ($N_{sp}$).

**2.** Netzwerkfähige Entität gemäß Anspruch 1, wobei die netzwerkfähige Entität Teil eines hierarchischen Peer-zu-Peer-Systems ist, mit einem Lastausgleich zum Ausgleichen der Last, die in dem hierarchischen Peer-zu-Peer-System erzeugt wird, einheitlich über die beteiligten Superpeers.

**3.** Netzwerkfähige Entität gemäß Anspruch 1 oder 2, bei der die Superpeers des hierarchischen Peer-zu-Peer-Systems in einem Chord-Netzwerk angeordnet sind.

**4.** Netzwerkfähige Entität gemäß einem der vorhergehenden Ansprüche, bei der der Schätzer (14) konfiguriert ist, um die existierende Anzahl von Superpeers ($N_{sp}$) basierend auf einem Parameter p der geometrischen Verteilung von einer Länge eines Intervalls zwischen einer ID der netzwerkfähigen Entität (10) und einer ID eines direkten Nachfolgers der netzwerkfähigen Entität (10) zu schätzen.

**5.** Netzwerkfähige Entität gemäß einem der vorhergehenden Ansprüche, bei der der Schätzer (14) konfiguriert ist, um einen Systemlastfaktor (L) als die tatsächliche Netzwerksituation zu verwenden, wobei der Systemlastfaktor (L) ein Verhältnis zwischen Durchschnitts-Peer-Kosten und Maximal-Peer-Kosten in einem lastausgeglichenen, hierarchischen Peer-zu-Peer-System bezeichnet.

6. Netzwerkfähige Entität gemäß einem der vorangehenden Ansprüche, bei der der Schätzer (14) angepasst ist, um eine durchschnittliche Anzahl ($\lambda$) aus Nachschlagmeldungen zu schätzen, die durch einen Superpeer erzeugt werden, um eine mittlere Anzahl ($\mu$) von Wartungsmeldungen zu schätzen, die durch einen Superpeer erzeugt werden, und um eine durchschnittliche Anzahl ($\rho$) von REPUPLISH-Meldungen pro Superpeer zu schätzen.

7. Netzwerkfähige Entität gemäß Anspruch 6, bei der der Schätzer (14) angepasst ist zum Schätzen der durchschnittlichen Anzahl ($\lambda$) von erzeugten Nachschlagmeldungen pro Superpeer basierend auf der geschätzten existierenden Superpeer-Anzahl ($N_{sp}$) und einer geschätzten Nachschlagrate (R).

8. Netzwerkfähige Entität gemäß Anspruch 7, bei der der Schätzer (14) angepasst ist, um die durchschnittliche Anzahl ($\lambda$) von erzeugten Nachschlagmeldungen pro Superpeer zu schätzen gemäß

$$\lambda = (2 + \log_2 N_{SP}) \cdot \tfrac{R}{N_{SP}} .$$

9. Netzwerkfähige Entität gemäß Anspruch 6, bei der der Schätzer (14) angepasst ist zum Schätzen der durchschnittlichen Anzahl von Wartungsmeldungen ($\mu$) pro Superpeer basierend auf der geschätzten existierenden Superpeer-Anzahl ($N_{sp}$) und einer geschätzten Gruppengröße (M) in Bezug auf ein Durchschnittsverhältnis von Peers, die mit einem Superpeer verbunden sind.

10. Netzwerkfähige Entität gemäß Anspruch 9, bei der der Schätzer (14) angepasst ist zum Schätzen der durchschnittlichen Anzahl ($\mu$) von Wartungsmeldungen gemäß

$$\mu = \frac{3}{T_{stab}} + \frac{2\log_2 N_{sp}}{T_{fix}} + \frac{M-1}{T_{ping}} \quad ,$$

wobei $T_{stab}$ die Zeitperiode eines Chord-STABILIZE-Algorithmus bezeichnet, $T_{fix}$ die Zeitperiode des Chord-FIXFINGER-Algorithmus bezeichnet und $T_{ping}$ die Zeitperiode des Chords-PING-PONG-Algorithmus bezeichnet.

11. Netzwerkfähige Entität gemäß Anspruch 6, bei der der Schätzer (14) angepasst ist, um die durchschnittliche Anzahl ($\rho$) von REPUPLISH-Meldungen pro Superpeer zu schätzen, basierend auf einem Schätzwert einer Anzahl (F) der gemeinschaftlich verwendeten Objekte in dem hierarchischen Peer-zu-Peer-Netzwerk und der existierenden Superpeer-Anzahl ($N_{sp}$).

12. Netzwerkfähige Entität gemäß Anspruch 11, bei der der Schätzer (14) angepasst ist zum Schätzen der Anzahl ($\rho$) von REPUPLISH-Meldungen gemäß

$$\rho = (2 + \log_2 N_{sp}) \cdot \frac{F}{(T_{rep} \cdot N_{sp})} \quad .$$

13. Netzwerkfähige Entität gemäß einem der vorhergehenden Ansprüche, bei der der Schätzer (14) angepasst ist zum Schätzen einer mittleren Kapazität (C) pro Superpeer des hierarchischen Peer-zu-Peer-Netzwerks und zum Schätzen der tatsächlichen Netzwerksituation (L) basierend auf der geschätzten durchschnittlichen Anzahl ($\lambda$) von erzeugten Nachschlagmeldungen pro Superpeer, der geschätzten durchschnittlichen Anzahl von Wartungsmeldungen ($\mu$) pro Superpeer, der geschätzten durchschnittlichen Anzahl ($\rho$) von REPUPLISH-Meldungen pro Superpeer und der geschätzten mittleren Kapazität (C).

14. Netzwerkfähige Entität gemäß Anspruch 13, bei der der Schätzer (14) angepasst ist, um die tatsächliche Netzwerksituation (L) zu schätzen gemäß

$$L = \frac{\lambda + \mu + \rho}{C} \quad .$$

**15.** Netzwerkfähige Entität gemäß einem der vorhergehenden Ansprüche, bei der die Steuerung (16) angepasst ist zum Vergleichen eines Systemlastfaktors (L) abhängig von der tatsächlichen Netzwerksituation mit einem gewünschten Systemlastfaktor ($L_{des}$) und zum Erhöhen der notwendigen Superpeer-Anzahl ($N^*_{sp}$) im Vergleich zu der existierenden Superpeer-Anzahl ($N_{sp}$) in dem Fall, dass der aktuelle Systemlastfaktor (L) größer ist als der gewünschte Systemlastfaktor ($L_{des}$), und um die notwendige Superpeer-Anzahl ($N^*_{sp}$) im Vergleich zu der existierenden Superpeer-Anzahl ($N_{sp}$) in dem Fall zu verringern, dass der aktuelle Systemlastfaktor (L) kleiner ist als der gewünschte Systemlastfaktor ($L_{des}$).

**16.** Netzwerkfähige Entität gemäß einem der vorangehenden Ansprüche, bei der der Schätzer (14) angepasst ist, um Werte für eine durchschnittliche Nachschlagrate (R), eine durchschnittliche Gruppengröße (M), eine durchschnittliche Anzahl von gemeinschaftlich verwendeten Elementen (F) und eine durchschnittliche Kapazität von Superpeers (C) zu schätzen, basierend auf Werten, die spezifisch für die netzwerkfähige Entität (10) sind.

**17.** Netzwerkfähige Entität gemäß einem der vorangehenden Ansprüche, bei der der Schätzer (14) angepasst ist zum Schätzen einer durchschnittlichen Nachschlagrate (R), einer durchschnittlichen Gruppengröße (M), einer durchschnittlichen Anzahl von gemeinschaftlich verwendeten Elementen (F) und einer durchschnittlichen Kapazität von Superpeers (C), unter Verwendung von verwandten Werten von benachbarten netzwerkfähigen Entitäten, die Superpeers sind, zusätzlich zu eigenen Werten, zum Bestimmen von Mittelwerten für die Werte.

**18.** Netzwerkfähige Entität (10), die folgende Merkmale aufweist:

einen Schätzer (14) zum Schätzen einer Superpeer-Einstellung von einer existierenden Superpeer-Anzahl ($N_{sp}$) zu einer notwendigen Superpeer-Anzahl ($N^*_{sp}$) von erforderlichen Superpeers in einem hierarchischen Peer-zu-Peer-Netz, wobei die Superpeer-Einstellung von einem Ergebnis eines Vergleichs eines Schätzwerts für einen tatsächlichen Systemlastfaktor (L) und einem gewünschten Systemlastfaktor ($L_{des}$) abhängt, wobei der gewünschte Systemlastfaktor ($L_{des}$) auf einen kleineren Wert als 100 % eingestellt ist, und wobei der Schätzwert für die tatsächliche Systemlast (L) von einem Schätzwert für eine existierende Superpeer-Anzahl ($N_{sp}$) von tatsächlich existierenden Superpeers in dem hierarchischen Peer-zu-Peer-Netzwerk abhängt; und
eine Steuerung (16) zum Beenden von Superpeer-Charakteristika der netzwerkfähigen Entität (10) in dem Fall, dass die notwendige Superpeer-Anzahl ($N^*_{sp}$) kleiner ist als der Schätzwert für die existierende Superpeer-Anzahl ($N_{sp}$).

**19.** Verfahren zum Betreiben einer netzwerkfähigen Entität, wobei das Verfahren folgende Schritte aufweist:

Schätzen einer existierenden Superpeer-Anzahl (S11) von tatsächlich existierenden Superpeers in einem hierarchischen Peer-zu-Peer-Netzwerk;
Schätzen eines tatsächlichen Systemlastfaktor (L) (S 13) basierend auf der geschätzten, existierenden Superpeer-Anzahl ($N_{sp}$);
Vergleichen des Schätzwerts für den tatsächlichen Systemlastfaktor (L) mit einem gewünschten Systemlastfaktor ($L_{des}$), wobei der gewünschte Systemlastfaktor ($L_{des}$) auf einen Wert kleiner als 100 % eingestellt ist,
Schätzen einer Superpeer-Einstellung von der existierenden Superpeer-Anzahl zu einer notwendigen Superpeer-Anzahl (S 15) von erforderlichen Superpeers in dem hierarchischen Peer-zu-Peer-Netzwerk basierend auf einem Ergebnis des Vergleichs; und
Fördern einer anderen netzwerkfähigen Entität, um ein Superpeer (S21) zu werden, in dem Fall, dass die notwendige Superpeer-Anzahl ($N^*_{sp}$) größer ist als der Schätzwert für die existierende Superpeer-Anzahl ($N_{sp}$).

**20.** Verfahren zum Betreiben einer netzwerkfähigen Entität, wobei das Verfahren folgende Schritte aufweist:

Schätzen einer existierenden Superpeer-Anzahl (S11) von tatsächlich existierenden Superpeers in einem hierarchischen Peer-zu-Peer-Netzwerk;

Schätzen eines tatsächlichen Systemlastfaktor (L) (S 13) basierend auf der geschätzten, existierenden Super-peer-Anzahl ($N_{sp}$);

Vergleichen des Schätzwerts für den tatsächlichen Systemlastfaktor (L) mit einem gewünschten Systemlastfaktor ($L_{des}$), wobei der gewünschte Systemlastfaktor ($L_{des}$) auf einen Wert kleiner als 100 % eingestellt ist,

Schätzen einer Superpeer-Einstellung von der existierenden Superpeer-Anzahl zu einer notwendigen Superpeer-Anzahl (S 15) von erforderlichen Superpeers in dem hierarchischen Peer-zu-Peer-Netzwerk basierend auf einem Ergebnis des Vergleichs; und

Beenden von Superpeer-Charakteristika der netzwerkfähigen Entität (S22) in dem Fall, dass die notwendige Superpeer-Anzahl ($N^*_{sp}$) kleiner ist als der Schätzwert für die existierende Superpeer-Anzahl ($N_{sp}$).

21. Computerprogramm zum Ausführen von einem der Verfahren gemäß den Ansprüchen 19 oder 20, wenn das Computerprogramm auf einem Computer oder einer Mikrosteuerung läuft.

**Revendications**

1. Entité permettant la communication en réseau (10), comprenant:

un estimateur (14) destiné à estimer un ajustement de super-postes d'un nombre de super-postes existants ($N_{sp}$) à un nombre de super-postes nécessaires ($N^*_{sp}$) parmi les super-postes requis dans un réseau de poste à poste hiérarchique, l'ajustement de super-postes dépendant d'un résultat d'une comparaison entre une estimation d'un facteur de charge de système réel (L) et un facteur de charge de système désiré ($L_{des}$), où le facteur de charge de système désiré ($L_{des}$) est réglé à une valeur inférieure à 100%, et où l'estimation de la charge de système réelle (L) dépend d'une estimation d'un nombre de super-postes existants ($N_{sp}$) parmi les super-postes réellement existants dans le réseau de poste à poste hiérarchique; et

un contrôleur (16) destiné à promouvoir une entité différente permettant la communication en réseau à devenir un super-poste au cas où le nombre de super-postes nécessaires ($N^*_{sp}$) est supérieur à l'estimation du nombre de super-postes existants ($N_{sp}$).

2. Entité permettant la communication en réseau selon la revendication 1, dans laquelle l'entité permettant la communication en réseau fait partie d'un système de poste à poste hiérarchique à équilibrage de charge destiné à équilibrer la charge qui est générée dans le système de poste à poste hiérarchique de manière uniforme sur les super-postes participants.

3. Entité permettant la communication en réseau selon la revendication 1 ou 2, dans laquelle les super-postes du système de poste à poste hiérarchique sont disposés dans un réseau de Chord.

4. Entité permettant la communication en réseau selon l'une des revendications précédentes, dans laquelle l'estimateur (14) est configuré pour estimer le nombre de super-postes existants ($N_{sp}$) sur base d'un paramètre de répartition géométrique p d'une longueur d'un intervalle entre une ID de l'entité permettant la communication en réseau (10) et une ID d'un successeur direct de l'entité permettant la communication en réseau (10).

5. Entité permettant la communication en réseau selon l'une des revendications précédentes, dans laquelle l'estimateur (14) est configuré pour utiliser un facteur de charge de système (L) comme situation de réseau réelle, où le facteur de charge de système (L) désigne un rapport entre un coût de poste moyen et un coût de poste maximum dans un système de poste à poste hiérarchique à charge équilibrée.

6. Entité permettant la communication en réseau selon l'une des revendications précédentes, dans laquelle l'estimateur (14) est adapté pour estimer un nombre moyen ($\lambda$) de messages de consultation générés par un super-poste, pour estimer un nombre moyen ($\mu$) de messages de maintenance générés par un super-poste et pour estimer un nombre moyen ($\rho$) de messages REPUPLISH par super-poste.

7. Entité permettant la communication en réseau selon la revendication 6, dans laquelle l'estimateur (14) est adapté pour estimer le nombre moyen ($\lambda$) de messages de consultation générés par super-poste sur base du nombre estimé de super-postes existants ($N_{sp}$) et d'un taux de consultation estimé (R).

8. Entité permettant la communication en réseau selon la revendication 7, dans laquelle l'estimateur (14) est adapté pour estimer le nombre moyen ($\lambda$) de messages de consultation générés par super-poste selon

$$\lambda = (2 + log_2\ N_{SP}) \cdot \frac{R}{N_{SP}} \qquad .$$

**9.** Entité permettant la communication en réseau selon la revendication 6, dans laquelle l'estimateur (14) est adapté pour estimer le nombre moyen ($\mu$) de messages de maintenance par super-poste sur base du nombre estimé de super-postes existants ($N_{sp}$) et d'une grandeur de groupe estimée (M) se référant à un ratio moyen de postes connectés à un super-poste.

**10.** Entité permettant la communication en réseau selon la revendication 9, dans laquelle l'estimateur (14) est adapté pour estimer le nombre moyen ($\mu$) de messages de maintenance selon

$$\mu = \frac{3}{T_{stab}} + \frac{2\log_2 N_{sp}}{T_{fix}} + \frac{M-1}{T_{ping}}\ ,$$

où $T_{stab}$ désigne le laps de temps d'un algorithme STABILIZE de Chord, $T_{fix}$ désigne le laps de temps de l'algorithme FIXFINGER de Chord et $T_{ping}$ désigne le laps de temps de l'algorithme PING-PONG de Chord.

**11.** Entité permettant la communication en réseau selon la revendication 6, dans laquelle l'estimateur (14) est adapté pour estimer le nombre moyen ($\rho$) de messages REPUPLISH par super-poste sur base d'une estimation d'un nombre (F) d'objets partagés dans le système de poste à poste hiérarchique et du nombre de super-postes existants ($N_{sp}$).

**12.** Entité permettant la communication en réseau selon la revendication 11, dans laquelle l'estimateur (14) est adapté pour estimer le nombre moyen ($\rho$) de messages REPUPLISH selon

$$\rho = (2 + \log_2 N_{sp}) \cdot \frac{F}{(T_{rep} \cdot N_{sp})} \qquad .$$

**13.** Entité permettant la communication en réseau selon l'une des revendications précédentes, dans laquelle l'estimateur (14) est adapté pour estimer une capacité moyenne (C) par super-poste du réseau de poste à poste hiérarchique et pour estimer la situation de réseau réelle (L) sur base du nombre moyen estimé ($\lambda$) de messages de consultation générés par super-poste, du nombre moyen estimé ($\mu$) de messages de maintenance par super-poste, du nombre moyen estimé ($\rho$) de messages REPUPLISH par super-poste et de la capacité moyenne estimée (C).

**14.** Entité permettant la communication en réseau selon la revendication 13, dans laquelle l'estimateur (14) est adapté pour estimer la situation de réseau réelle (L) selon

$$L = \frac{\lambda + \mu + \rho}{C}\ .$$

**15.** Entité permettant la communication en réseau selon l'une des revendications précédentes, dans laquelle le contrôleur (16) est adapté pour comparer un facteur de charge de système (L) dépendant de la situation de réseau réelle à un facteur de charge de système désiré ($L_{des}$) et pour augmenter le nombre de super-postes nécessaire ($N^*_{sp}$) comparé au nombre de super-postes existants ($N_{sp}$) au cas où le facteur de charge de système actuel (L) est supérieur au facteur de charge de système désiré ($L_{des}$), et pour diminuer le nombre de super-postes nécessaire

($N^*_{sp}$) comparé au nombre de super-postes existants ($N_{sp}$) au cas où le facteur de charge de système actuel (L) est inférieur au facteur de charge de système désiré ($L_{des}$).

16. Entité permettant la communication en réseau selon l'une des revendications précédentes, dans laquelle l'estimateur (14) est adapté pour estimer les valeurs d'un taux de consultation moyen (R), d'une grandeur de groupe moyenne (M), d'un nombre moyen d'objets partagés (F) et d'une capacité moyenne de super-postes (C) sur base des valeurs spécifiques de ladite entité permettant la communication en réseau (10).

17. Entité permettant la communication en réseau selon l'une des revendications précédentes, dans laquelle l'estimateur (14) est adapté pour estimer un taux de consultation moyen (R), une grandeur de groupe moyenne (M), un nombre moyen d'objets partagés (F) et une capacité moyenne de super-postes (C) à l'aide des valeurs relatives d'entités permettant la communication en réseau voisines qui sont des super-postes en plus des valeurs propres pour déterminer les valeurs moyennes desdites valeurs.

18. Entité permettant la communication en réseau (10), comprenant:

un estimateur (14) destiné à estimer un ajustement de super-postes d'un nombre de super-postes existants ($N_{sp}$) à un nombre de super-postes nécessaires ($N^*_{sp}$) parmi les super-postes requis dans un réseau de poste à poste hiérarchique, l'ajustement de super-postes dépendant d'un résultat d'une comparaison entre une estimation d'un facteur de charge de système réel (L) et un facteur de charge de système désiré ($L_{des}$), où le facteur de charge de système désiré ($L_{des}$) est réglé à une valeur inférieure à 100%, et où l'estimation de la charge de système réelle (L) dépend d'une estimation d'un nombre de super-postes existants ($N_{sp}$) parmi les super-postes réellement existants dans le réseau de poste à poste hiérarchique; et

un contrôleur (16) destiné à terminer les caractéristiques de super-poste de l'entité permettant la communication en réseau (10) au cas où le nombre de super-postes nécessaires ($N^*_{sp}$) est inférieur à l'estimation du nombre de super-postes existants ($N_{sp}$).

19. Procédé pour faire fonctionner une entité permettant la communication en réseau, le procédé comprenant les étapes suivantes consistant à:

estimer un nombre de super-postes existants (S11) parmi les super-postes réellement existants dans un réseau de poste à poste hiérarchique;

estimer un facteur de charge de système réel (L) (S 13) sur base du nombre de super-postes existants estimés ($N_{sp}$);

comparer l'estimation du facteur de charge de système réel (L) avec un facteur de charge de système désiré ($L_{des}$), où le facteur de charge de système désiré ($L_{des}$) est réglé à une valeur inférieure à 100%,

estimer un ajustement de super-postes du nombre de super-postes existants à un nombre de super-postes nécessaires (S 15) parmi les super-postes requis dans le réseau de poste à poste hiérarchique sur base d'un résultat de la comparaison; et

promouvoir une entité différente permettant la communication en réseau à devenir un super-poste (S21) au cas où le nombre de super-postes nécessaires ($N^*_{sp}$) est supérieur à l'estimation du nombre de super-postes existants ($N_{sp}$).

20. Procédé pour faire fonctionner une entité permettant la communication en réseau, le procédé comprenant les étapes suivantes consistant à:

estimer un nombre de super-postes existants (S11) parmi les super-postes réellement existants dans un réseau de poste à poste hiérarchique;

estimer un facteur de charge de système réel (L) (S 13) sur base du nombre de super-postes existants estimés ($N_{sp}$);

comparer l'estimation du facteur de charge de système réel (L) avec un facteur de charge de système désiré ($L_{des}$), où le facteur de charge de système désiré ($L_{des}$) est réglé à une valeur inférieure à 100%,

estimer un ajustement de super-postes du nombre de super-postes existants à un nombre de super-postes nécessaires (S15) parmi les super-postes requis dans le réseau de poste à poste hiérarchique sur base d'un résultat de la comparaison; et

terminer les caractéristiques de super-poste de l'entité permettant la communication en réseau (S22) au cas où le nombre de super-postes nécessaires ($N^*_{sp}$) est inférieur à l'estimation du nombre de super-postes existants ($N_{sp}$).

21. Programme d'ordinateur pour réaliser l'une des procédés selon les revendications 19 ou 20 lorsque le programme d'ordinateur est exécuté sur un ordinateur ou un microcontrôleur.

10

14

18                                        19

12-1                                        12-K

16

12-2          12-3    · · · · ·      12-(K-1)

FIG 1

FIG.2

FIG 3

FIG 4

FIG 5

FIG 6

FIG 7

FIG 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 06024317 A

### Non-patent literature cited in the description

- **ZOELS S. ; DESPOTOVIC Z. ; KELLERER W.** Cost-Based Analysis of Hierarchical DHT Design. *Sixth IEEE International Conference on P2P Computing,* 2006
- **B. YANG ; H. GARCIA-MOLINA.** Designing a Super-Peer Network. *Proceedings of the 19th International Conference on Data Engineering (ICDE03,* 2003, vol. 1063 (6382/03
- **A. MONTRESOR.** A robust protocol for building superpeer overlay topologies. *Proceedings of the Fourth International Conference on Peer-to-Peer Computing,* 2004, vol. 2004, 202-209
- **G. JESI ; A. MONTRESOR ; O. BABAOGLU.** Proximity-Aware Superpeer Overlay Topologies. *Proceedings of the 2nd IEEE International Workshop on SelfMan,* 2006, 43-57
- **M. CASTRO ; M. COSTA ; A. ROWSTRON.** Debunking some myths about structured and unstructured overlays. *NSDI'05,* 2005
- **A. ROWSTRON ; P. DRUSCHEL.** Pastry: Scalable, distributed object location and routing for large-scale peer-to-peer systems. *IFIP/ACM International Conference on Distributed Systems Platforms (Middleware,* 2001, 329-350
- **J. SACHA ; J. DOWLING ; R. CUN-NINGHAM ; R. MEIER.** Discovery of stable peers in a self-organising peer-to-peer gradient topology. *Proceedings of the 6th IFIP International Conference on Distributed Applications and Interoperable Systems,* 2006, 70-83
- **J. LI ; J. STRIBLING ; R. MORRIS ; M. F. KAASHOEK.** Bandwidth-efficient management of DHT routing tables. *NSDI,* 2005
- **A. BINZENHOFER ; D. STAEHLE ; R. HENJES.** On the Fly Estimation of the Peer Population in a Chord-based peer-to-peer System. *19th International Teletraffic Congress (ITC19,* 2005